(19) Europäisches Patentamt
European Patent Office
Office européen des brevets

(11) **EP 2 711 854 B1**

(12) **EUROPEAN PATENT SPECIFICATION**

(45) Date of publication and mention
of the grant of the patent:
**01.11.2017 Bulletin 2017/44**

(51) Int Cl.:
***G06F 17/30*** *(2006.01)*

(21) Application number: **13185253.5**

(22) Date of filing: **20.09.2013**

(54) **Search system, method and program based on n-grams**

Suchsystem, Suchverfahren und Programm

Système de recherche, procédé de recherche et programme

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2012 JP 2012207530**

(43) Date of publication of application:
**26.03.2014 Bulletin 2014/13**

(73) Proprietor: **CASIO COMPUTER CO., LTD.
Shibuya-ku,
Tokyo 151-8543 (JP)**

(72) Inventor: **Satoh, Katsuhiko
Hamura-shi, Tokyo 205-8555 (JP)**

(74) Representative: **Grünecker Patent- und
Rechtsanwälte
PartG mbB
Leopoldstraße 4
80802 München (DE)**

(56) References cited:
**EP-A2- 1 288 799       US-A1- 2009 144 266
US-A1- 2011 264 675     US-A1- 2012 078 919
US-B1- 7 685 093**

• **LEONID BOYTSOV: "Indexing methods for
approximate dictionary searching", JOURNAL
OF EXPERIMENTAL ALGORITHMICS, vol. 16,
May 2011 (2011-05), page 1.1, XP055093006,
ISSN: 1084-6654, DOI: 10.1145/1963190.1963191**

EP 2 711 854 B1

**Description**

This application relates to a search system, a search method, and a program.

Search systems have been proposed that are capable of efficiently searching a large volume of search-target text data for texts including a search keyword. For example, Unexamined Japanese Patent Application Kokai Publication No. 2000-231563 (referred to as "Patent Literature 1" below) discloses a technique for enabling a search process that takes into account, for each search hit, whether or not the search hit portion extends over multiple words (search by taking account of word boundaries) and a search process that does not take account of such information in each search hit (search by not taking account of word boundaries), separately. The search system according to Patent Literature 1 stores, as a word search index, information on the appearing position of each *n*-gram and information on the position of each word boundary in order to search in consideration of the boundary.

In text search, multiple kinds of search results are desired to be used in some cases. For example, suppose that search-target text data is searched by a keyword, and results obtained through perfect-match search are desired to be used preferentially, while results obtained through beginning-match search are also desired to be used.

In the case of the search system according to Patent Literature 1, to use search results obtained by carrying out the above-mentioned multiple search methods (that is, searching by taking account of the word boundaries and not taking account of the word boundaries), users need to carry out the search methods separately, and afterwards the users have to find needed texts by making a comparison of each search result. Thus, the search system has problems in terms of convenience for users when searching.

A search system not taking into account the word boundaries is also known from US patent application 2011/0264675 A1.

The present invention has been made in view of the above circumstances, and aims to provide a search system and the like that are convenient for users.

This is achieved by the features of the independent claims.

A more complete understanding of this application can be obtained when the following detailed description is considered in conjunction with the following drawings, in which:

FIG. 1 is a perspective view showing an example of a text search system according to Embodiment 1 of the present invention;

FIG. 2 is a hardware block diagram showing an example of the configuration of the text search system according to Embodiment 1;

FIG. 3 is a flowchart showing an example of a process of generating data and the like carried out by the text search system according to Embodiment 1;

FIG. 4 is a functional block diagram showing an example of functions included in the text search system according to Embodiment 1;

FIG. 5A is a diagram showing an example of dictionary data stored by the text search system;

FIG. 5B is a diagram showing an example of rearranged content text data stored by the text search system;

FIG. 6 is a diagram showing an example of a display screen for text-search results displayed by the text search system according to Embodiment 1;

FIG. 7 is a diagram showing an example of a dictionary table stored by the text search system according to Embodiment 1;

FIG. 8 is a diagram showing an example of electronic files including an inverted index and stored by the text search system according to Embodiment 1;

FIG. 9 is a flowchart showing an example of a text search process carried out by the text search system according to Embodiment 1; text search system according to Embodiment 1;

FIG. 10A is a diagram showing an example of an *n*-gram extraction process carried out by the text search system according to Embodiment 1 when a search keyword consists of one character;

FIG. 10B is a diagram showing an example of the *n*-gram extraction process carried out by the text search system according to Embodiment 1 when a search keyword consists of four characters;

FIG. 11 is a flowchart showing an example of a keyword search process carried out by the text search system according to Embodiment 1;

FIG. 12 is a flowchart showing an example of a single-character-string search process carried out by the text search system according to Embodiment 1;

FIG. 13 is a flowchart showing an example of an appearing-position acquisition process carried out by the text search system according to Embodiment 1;

FIG. 14 is a flowchart showing an example of a match-mode determination process carried out by the text search system according to Embodiment 1;

FIG. 15 is a flowchart showing an example of a multiple-character-string search process carried out by the text search system according to Embodiment 1;

FIG. 16 is a diagram showing an example of a determination method table stored by the text search system according to Embodiment 1;

FIG. 17A is a diagram showing an example of the distance between a verification character string and a standard character string when an identified appearing position of the verification character string comes after an identified appearing position of the standard character string;

FIG. 17B is a diagram showing an example of the distance between the verification character string and the standard character string when the identified appearing position of the verification character string comes before the identified appearing position of the standard character string; and

FIG. 18 is a diagram showing an example of the minimum value and the maximum value of a minimum inclusion range of a search keyword.

A text search system 100 according to Embodiment 1 of the present invention is described below with reference to the accompanying drawings.

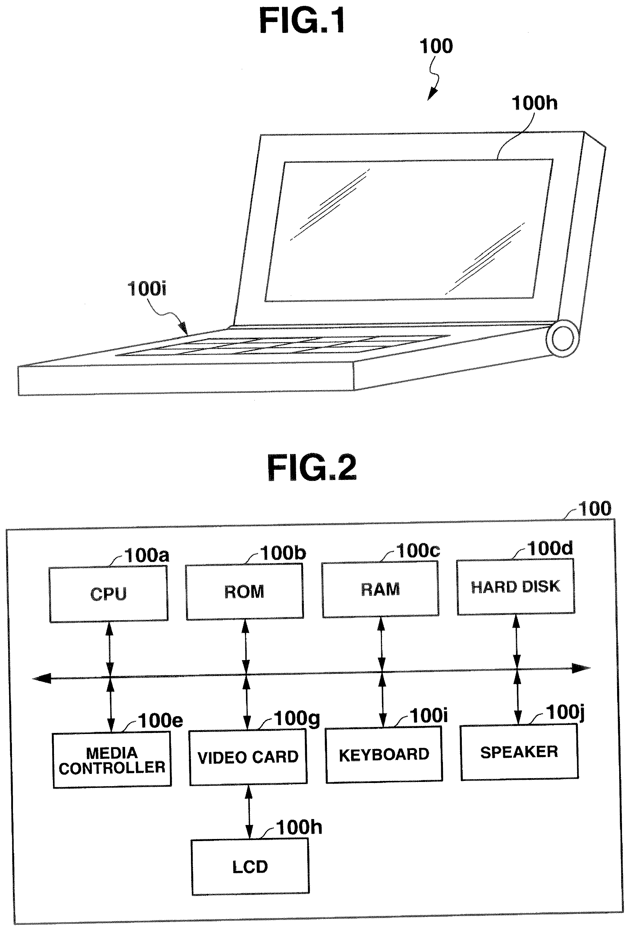

The text search system 100 according to the embodiment of the present invention comprises an electronic dictionary as the one shown in FIG. 1. The text search system 100 includes: a keyboard 100i that is used for inputting one or more search keywords in accordance with a user operation; and a liquid crystal display (LCD) 100h that displays search results obtained by searching the dictionary by the one or more search keywords.

The text search system 100 includes a central processing unit (CPU) 100a, a read only memory (ROM) 100b, a random access memory (RAM) 100c, a hard disk 100d, a media controller 100e, a video card 100g, and a speaker 100j, which are shown in FIG. 2. The LCD 100h and the keyboard 100i shown in FIG. 1 are each connected via a bus.

For a search process, the CPU 100a controls each of the components of the text search system 100 by executing an appropriate program stored in the ROM 100b or the hard disk 100d. The RAM 100c is used as a work area while the CPU 100a is executing the programs.

The hard disk 100d stores various kinds of tables and dictionary data such as data of an English-Japanese dictionary. Alternatively, it is possible for the text search system 100 to include a flash memory instead of the hard disk 100d.

The media controller 100e reads out various kinds of data and programs from a recording medium. The recording medium is, for example, a flash memory, a compact disc (CD), a digital versatile disc (DVD), a Blu-ray Disc (registered trademark), or the like.

The video card 100g renders an image on the basis of a digital signal outputted from the CPU 100a. In addition, the video card 100g outputs an image signal that represents the rendered image. The LCD 100h displays an image on the basis of the image signal outputted from the video card 100g. Alternatively, it is possible for the text search system 100 to include a plasma display panel (PDP) or an electroluminescence (EL) display instead of the LCD 100h. The speaker 100j outputs sound on the basis of the signal outputted from the CPU 100a.

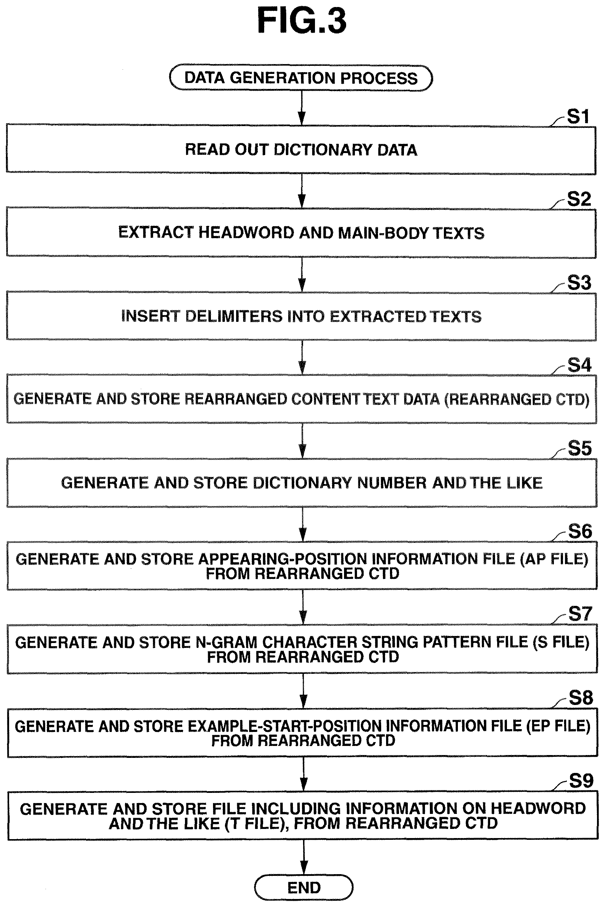

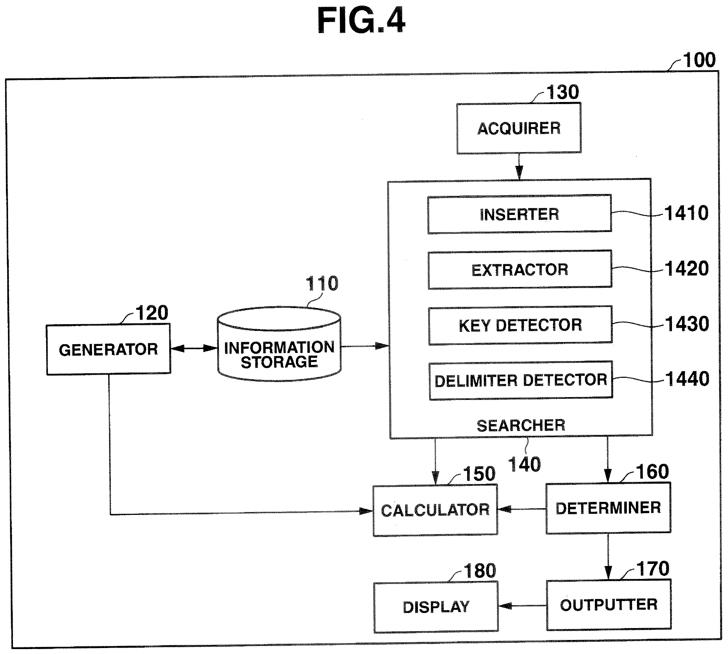

When a user inserts a recording medium in which dictionary data is recorded, into the media controller 100e shown in FIG. 2, the CPU 100a reads out the dictionary data from the media controller 100e. After reading out the dictionary data from the media controller 100e, the CPU 100a stores the dictionary data in the hard disk 100d. Then, the CPU 100a carries out a process of generating data and the like (referred to as a data generation process below), which is shown in FIG. 3, and thereby generates, from the dictionary data, a search index to be used in the search process. In this way, the CPU 100a functions as a generator 120 shown in FIG. 4, in cooperation with other components of the text search system 100. FIG. 4 is a functional block diagram showing the functions implemented by the CPU 100a. The CPU 100a functions as an information storage 110 in cooperation with the hard disk 100d.

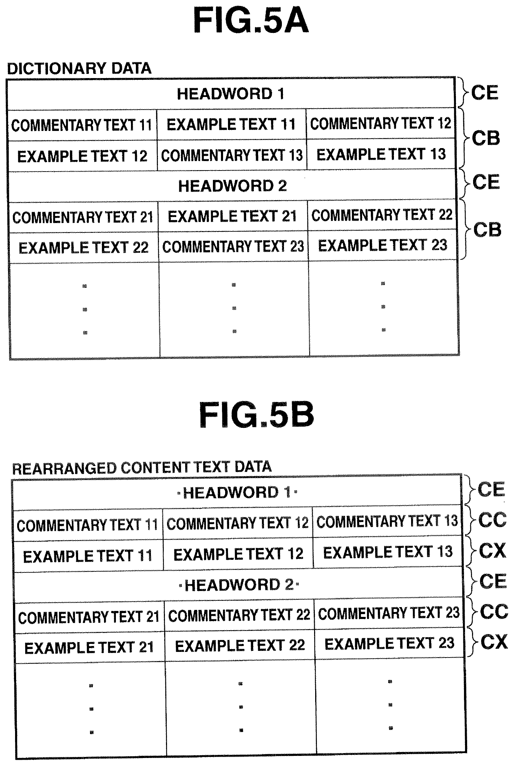

The information storage 110 stores the dictionary data to be a search target. As shown in FIG. 5A, the dictionary data comprises: texts each showing a headword (referred to as headword texts below); texts each showing a commentary of a headword (referred to as commentary texts below); and texts each showing an example of a headword (referred to as example texts below), the example being an idiomatic phrase, a compound word, or the like (referred to as an idiom below), for example. The commentary texts and the example texts of a headword are referred to as main-body texts in combination. In other words, the texts included in the dictionary data are classified into two categories, that is, one including headword texts and one including main-body texts (a headword category and a main-body category). The main-body category is further divided into two categories, that is, one including headword commentaries and one including headword examples (a commentary category and an example category).

In the dictionary data, the part corresponding to each headword text is referred to as a head part CE, and the part corresponding to each main-body text is referred to as a main-body part CB.

The commentary texts are each tagged with a commentary tag for showing that what is described by the commentary text is a commentary. Further, the example texts are each tagged with an example tag for showing that what is described by the example text is an example.

The dictionary data comprises multiple sets of the head part CE and the main-body part CB, each set serving as a unit. The units are arranged alphabetically on the basis of the headword texts included in the respective head parts CE. In each unit, the main-body part CB is positioned immediately after the head part CE.

Further, a headword number for identifying each head part CE is assigned to the head part CE in advance. In the dictionary data, associate for each headword are: information indicating a corresponding headword number; information indicating the start address of an area in the information storage 110, the area storing the head part CE identified by the headword number; and information indicating the start address of an area storing the main-body part CB stored immediately after the head part CE. The dictionary data includes the associated pieces of information for each headword. The above-described unit, which is a set of the head part CE and the main-body part CB, is also referred to as a "search-target text (character string)". In this case, the dictionary data includes multiple search-target texts.

In the main-body part CB, multiple commentary texts are arranged in the order specified by the editor of the electronic dictionary. As an example, a commentary text explaining a general meaning of the headword is arranged in a position before that of a commentary text explaining a special meaning of the headword. As another example, a commentary text explaining a frequently-used meaning of the headword is arranged in a position before that of a commentary text explaining a less-frequently-used meaning of the headword.

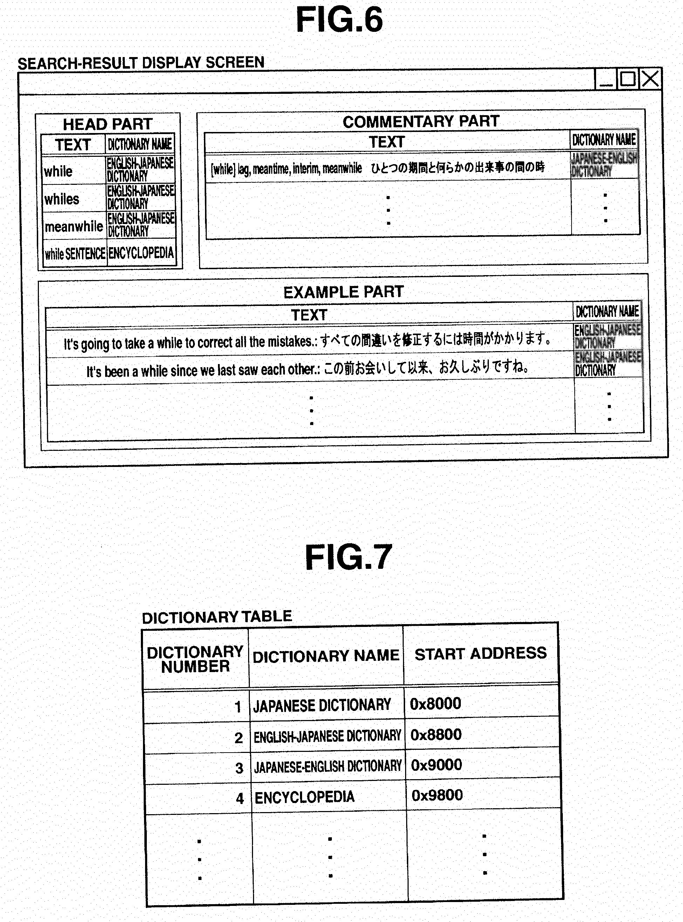

Suppose that a user inputs a search keyword by using the keyboard 100i. Then, the search system 100 searches out head texts, commentary texts, and example texts that include the search keyword, and then displays the search results for each text classification (FIG. 6). In this search process, the search system 100 searches out portions including the search keyword without taking account of the match modes (for example, exact match, beginning match, end match, partial match, and the like), and then displays the match portions according to the priorities. The search process includes a key search process for searching the dictionary data by a search keyword. The search process also includes a delimiter search process for determining the match mode (for example, exact match, beginning match, end match, partial match, or the like) of each search match portion searched-out by the key search process. The details of the key search process and the delimiter search process are to be described later.

In the following, the data generation process carried out to generate a search index to be used in the search process is described with reference to FIG. 3. Upon receipt of the dictionary data, the generator 120 initiates the data generation process shown in FIG. 3.

In the data generation process, first, the generator 120 reads out the dictionary data stored in the information storage 110 (Step S1).

Then, the generator 120 extracts, from the read-out dictionary data, headword texts and main-body texts, which include commentary texts and example texts (Step S2). At this stage, the commentary texts and the example texts are mixed in the main-body texts. The generator 120 then classifies the extracted texts on the basis of the contents. For the classification, the generator 120 extracts multiple headword texts and multiple main-body texts from the dictionary data by using the sets of information indicating a headword number, information indicating the start address of the corresponding head part CE, and information indicating the start address of the corresponding main-body part CB, which are included in the dictionary data.

Then, the generator 120 extracts, for each of the headword texts, multiple commentary texts each explaining the headword described by the headword text, from the main-body texts by referring to the commentary tag. In addition, the generator 120 extracts, for each of the headword texts, multiple example texts each showing an example of the headword described by the headword text, from the main-body texts by referring to the example tag.

Subsequently, the generator 120 inserts a mark indicating a word boundary, into the start and the end of each headword (Step S3). The mark indicating an edge portion is also referred to as a delimiter. In this embodiment, a half-size space is used as an example of the delimiter. When a headword is an English word, no half-size space is inserted into any of the positions where two words are set off by a half-size space. In such a case, the generator 120 inserts a half-size space only into each position before or after a word where no half-size space is inputted. For example, the generator 120 inserts a half-size space into a position before a word appearing at the beginning and not preceded by a half-size space, or a position after a word followed by a symbol such as a period ".", a comma ",", an exclamation mark "!", or a question mark "?".

Subsequently, the generator 120 generates and stores rearranged content text data (CTD) as the one shown in FIG. 5B (Step S4). Specifically, the generator 120 inserts a delimiter (shown by substituting " in FIG. 5B) into each headword text. In addition, the generator 120 arranges, for each unit, the extracted commentary texts as a group without changing the order of the texts. In this way, the generator 120 generates a part in which multiple commentary texts are arranged (referred to as a commentary part CC).

Similarly, the generator 120 arranges, for each unit, the multiple extracted example texts as a group without changing the order of the texts. In this way, the generator 120 generates a part in which multiple example texts are arranged (referred to as an example part CX).

In the above, explanation has been given to the example of inserting a delimiter into the positions before and after each head part CE (for example, before "m" and after "e" in the case of a headword "move"). However, insertion positions of a delimiter are not limited to these, and alternatively, it is possible that a delimiter is inserted into any positions. For example, a delimiter is inserted into positions before and after each word included in each commentary part CC and each example part CX. It is also possible that a delimiter is inserted only into positions before and after each important phrase among those included in each commentary part CC and each example part CX.

The generator 120 generates multiple pieces of data (rearranged content text data or rearranged CTD) in each of which the head part CE, the commentary part CC, and the example part CX are thus associated with each other. Then, the generator 120 stores the generated rearranged content text data in the information storage 110 (Step S4).

Subsequently, the generator 120 generates, for each dictionary, a dictionary number for identifying the dictionary represented by the rearranged content text data. Then, as shown in a dictionary table in FIG. 7, the generator 120 associates with each other: information indicating a generated dictionary number; information indicating a corresponding dictionary name; and information indicating the start address of a storage area in the information storage 110, the storage area storing the corresponding piece of the rearranged content text data. Thereafter, the generator 120 stores the associated pieces of information in the information storage 110 (Step S5).

Then, for each of the texts included in each piece of the rearranged content text data (that is, texts in the head part CE, the commentary part CC, and the example part CX), the generator 120 generates monograms of characters by shifting a one-character and clipping it from the text. Similarly, for each of the texts included in each piece of the rearranged content text data, the generator 120 generates bigrams of consecutive characters by shifting a two-character and clipping it from the text. In this way, the generator 120 extracts bigram character string patterns. In the following, monogram character string patterns and bigram character string patterns are commonly referred to as $n$-gram character string patterns.

Subsequently, the generator 120 identifies, for each $n$-gram character string pattern, one or more appearing positions in which the $n$-gram character string pattern appears, in the texts of the rearranged content text data (referred to as rearranged texts). Then, the generator 120 calculates, for each $n$-gram character string pattern, the appearance frequency of the $n$-gram character string pattern in the rearranged texts. Here, the appearance frequency is, for example, the total number of times the $n$-gram character string pattern appears in the rearranged texts. The appearance frequency is, however, not limited to the total number of times.

Thereafter, the generator 120 generates, for each $n$-gram character string pattern, appearing-position information by associating with each other: one or more pieces of information each indicating the address at which the $n$-gram character string pattern appears (referred to as an appearing position address below); and information indicating the appearance frequency of the $n$-gram character string pattern.

Subsequently, the generator 120 generates an electronic file including one or more pieces of appearing-position information of each $n$-gram character string pattern (referred to as an appearing-position information file or an AP file below), and then stores the electronic file in the information storage 110 (Step S6 in FIG. 3).

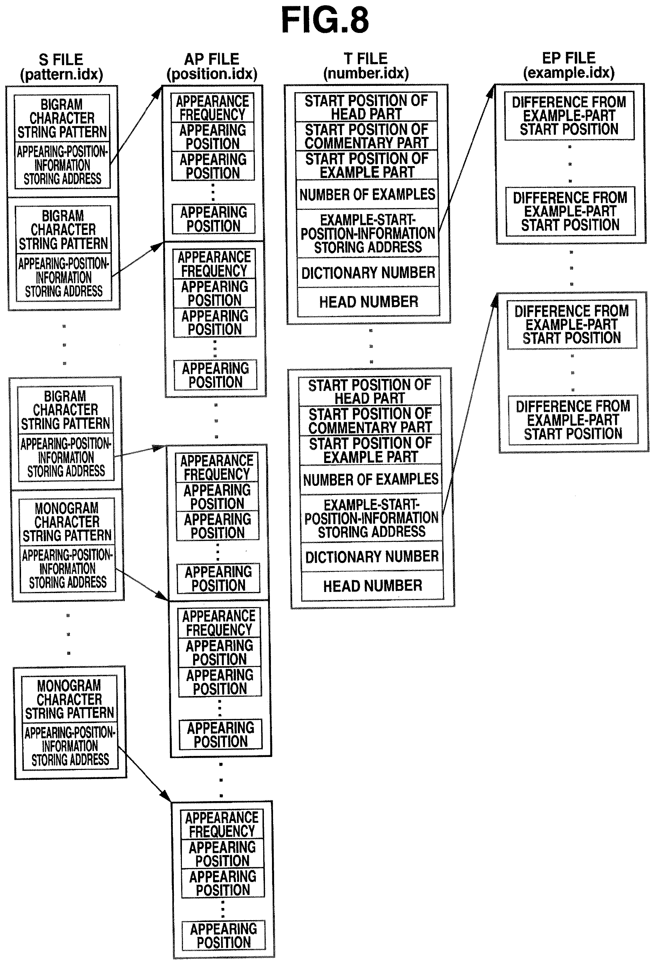

In FIG. 8, the appearing-position information file (AP file) is shown with a file name "position.idx''. As shown in FIG. 8, for each $n$-gram character string pattern, information indicating the appearance frequency is stored in the area starting from the start address and having a predetermined number of bytes. Further, pieces of information each indicating an appearing position address are stored in the respective areas starting immediately after the above area and each having a predetermined number of bytes.

Thereafter, the generator 120 associates with each other: information on each $n$-gram character string pattern; and information indicating the start address of a storage area in the information storage 110, the storage area storing the appearing-position information of the $n$-gram character string pattern. Then, the generator 120 generates an electronic file including multiple sets of the information pieces thus associated (an S file). Thereafter, the generator 120 stores the S file in the information storage 110 (Step S7).

In FIG. 8, the S file is shown with a file name "pattern.idx".

Subsequently, for each headword and for each example text classified into the example part CX of the headword, the generator 120 calculates the difference from the example-part start position, which is the difference between the start address of the example part CX and the start address of the example text. Then, the generator 120 generates, for each headword, example-start-position information including one or more pieces of information each indicating the difference from the example-part start position. Then, the generator 120 generates an electric file including multiple pieces of the example-start-position information thus generated (an EP file).

In FIG. 8, the EP file is shown with a file name "example.idx".

Subsequently, the generator 120 stores the EP file in the information storage 110 (Step S8 in FIG. 3). Each piece of the example-start-position information stored in the EP file includes one or more pieces of information each indicating the difference from the corresponding example-part start position. Each piece of information indicating the difference is stored in an area allocated for the difference and having a predetermined number of bytes.

Thereafter, the generator 120 generates a T file, which is an electronic file including multiple pieces of information each generated by associating with each other: a head number for identifying the head part CE of a headword; information indicating the start address of the storage area in the information storage 110, the storage area storing the head part CE; information indicating the start address of the commentary part CC including the commentary texts explaining the headword; information indicating the start address of the example part CX including the example texts describing the examples of the headword (referred to as an address indicating the start position of the example part CX below); information indicating the number of the examples included in the example part CX; information indicating the address of the start position of the area of the information storage 110, the area storing the example-start-position information of the example part CX (an EP file in FIG. 8) (referred to as an example-start-position information storing address below); and information indicating the dictionary number of a dictionary carrying the headword.

In FIG. 8, the T file is shown with a file name "number.idx".

The generator 120 stores the T file in the information storage 110 (Step S9 in FIG. 3), and thereafter terminates the data generation process.

The index structure that associates with each other and records each character string ($n$-gram in this embodiment) and the appearing position of the character string in the search-target texts, as that shown in FIG. 8 (especially in "pattern.idx" and "position.idx"), is referred to as a search index. In this embodiment, in the data generation process in FIG. 3, a search index is generated in which a half-size space serving as a delimiter indicating a word boundary is inserted into the positions before and after each text in the predetermined category (the headword category in this embodiment). This search index is also referred to as an inverted index.

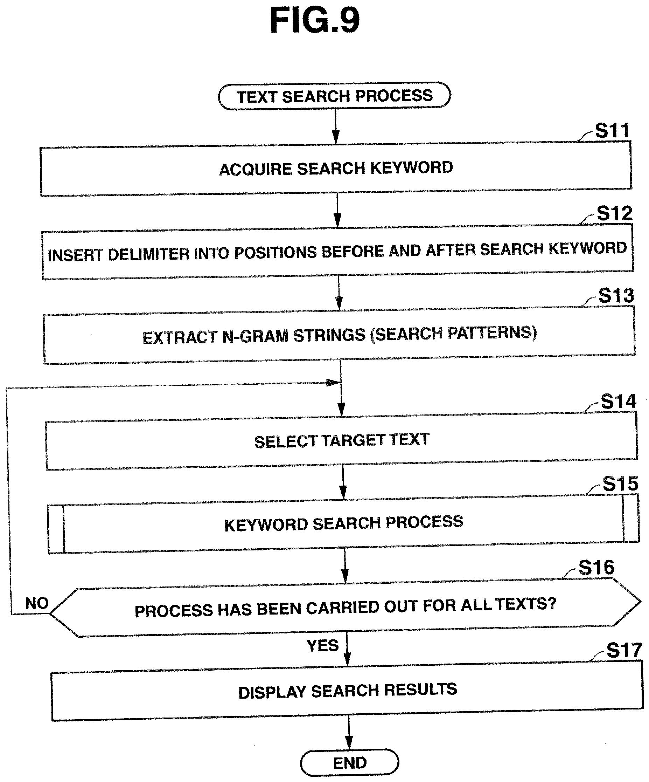

When the inverted index is stored in the information storage 110, the search process using the inverted index is ready to be carried out. Suppose that a user inputted a search keyword to be used for dictionary search, by using the keyboard 100i. Then, the CPU 100a receives the search keyword, and thereby carries out a text search process shown in FIG. 9.

By carrying out the text search process, the CPU 100a functions as an acquirer 130, a searcher 140, a calculator 150, a determiner 160, and an outputter 170, which are shown in FIG. 4. The searcher 140 includes an inserter 1410, an extractor 1420, a key detector 1430, and a delimiter detector1440. In addition, the CPU 100a functions as a display 180 in cooperation with the video card 100g and the LCD 100h shown in FIG. 2.

Upon receipt of the search keyword inputted by the user by using keyboard 100i, the CPU 100a initiates the text search process shown in FIG. 9. In the text search process, first, the acquirer 130 acquires the search keyword inputted by this stage (Step S11). Here, when the search keyword inputted by the user includes a delimiter (such as a space, for example), the acquirer 130 acquires multiple search keywords by setting off the keywords by the delimiter.

Thereafter, the inserter 1410 inserts a half-size space serving as a delimiter into the positions before and after the search keyword, and thereby generates a search character string (Step S12). In the case of acquiring multiple search keywords, the inserter 1410 inserts a delimiter into the positions before and after each of the search keywords.

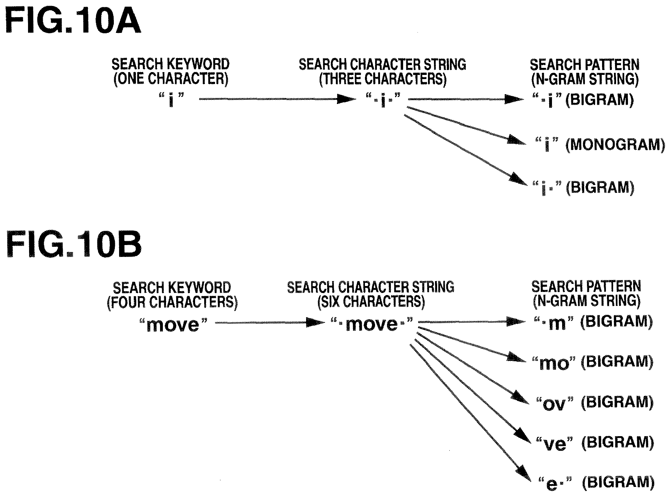

Further, the extractor 1420 extracts $n$-grams (search patterns) from the search character string into which the delimiters are inserted (Step S13). An example of an extraction process carried out in Step S13 is shown in FIGS. 10A and 10B. For example, when the inputted search keyword consists of one character ("i" in the example in FIG. 10A), the search character string consists of three characters including delimiters. In such a case, the extractor 1420 extracts, as $n$-grams, a bigram "·i" ("·" indicates a half-size space), a monogram "i", and a bigram "i·". These three $n$-grams are the $n$-gram character string patterns in this case. As described above, the first $n$-gram and the last $n$-gram of the search character string are set to each have characters the number of which is larger than that of a bigram. This makes it possible not to lose the positional relation between the search-keyword portion ("i" in this embodiment) and the delimiters in the search character string. In the case of acquiring multiple search keywords, $n$-gray character string patterns are generated for each keyword.

When the inputted search keyword consists of two or more characters ("move" consisting of four characters, in the example in FIG. 10B), all the $n$-grams to be extracted are bigrams ("·m", "mo", "ov", "ve", and "e·"). In such a case, it is possible to set any value for the value $n$ (the number of characters included in each pattern) under the condition that the $n$-grams each including a delimiter of those inserted into the respective positions before and after the search keyword are to have a larger number of characters than that of a bigram.

Subsequently, the searcher 140 selects a target text to be searched (one headword, and the commentaries and examples of the headword), from among multiple texts (the sets of a headword and a main body thereof) included in the search-target dictionary data (Step S14). Then, the searcher 140 initiates a keyword search process in which the target text is searched by the search keyword (Step S15).

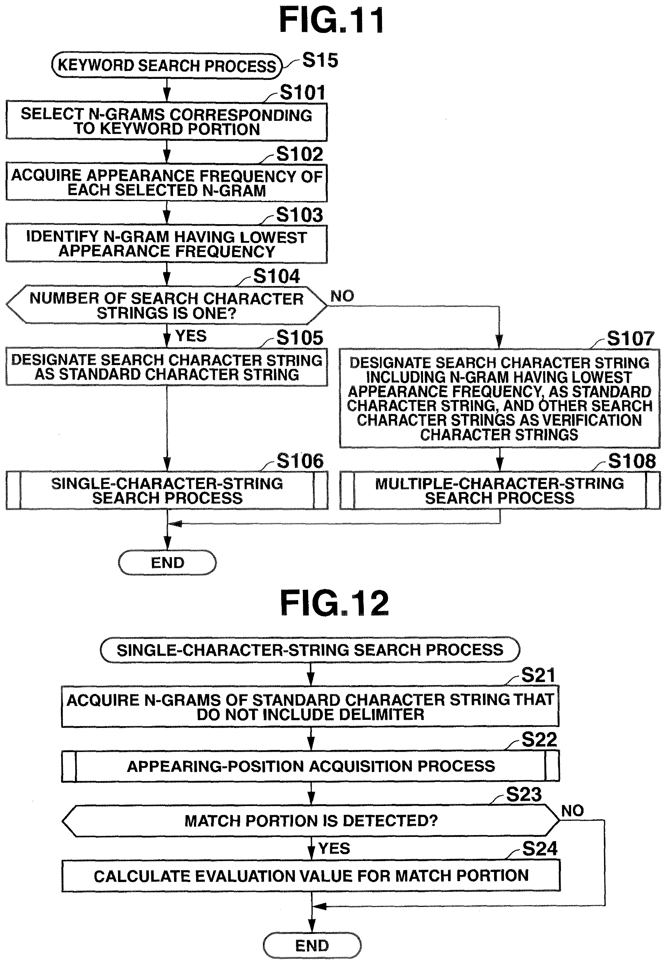

The keyword search process carried out in Step S15 is described below with reference to FIG. 11.

In the keyword search process, the key detector 1430 selects, from the $n$-grams extracted in Step S13, the $n$-grams corresponding to the keyword portion, that is, the $n$-grams not including any delimiter (for example, $n$-grams "mo", "ov", and "ve" when the search character string is "·move·") (Step S101). In the case of acquiring multiple search character strings, $n$-grams corresponding to the keyword portion are selected for each of the search character strings.

Thereafter, the appearance frequency of each of the $n$-grams is acquired (Step S102). Specifically, the key detector 1430 searches the AP file and the S file for the appearance frequency of each $n$-gram. More specifically, the key detector 1430 searches the S file ("pattern.idx" in FIG. 8) for the information indicating the appearing-position-information storing address associated with the information indicating each of the selected $n$-grams. In addition, the key detector 1430 acquires, from the AP file ("position.idx" in FIG. 8), the appearing-position information indicated by the appearing-position-information storing address thus searched out. Thereafter, the key detector 1430 extracts information indicating the appearance frequency of the *n*-gram from the acquired appearing-position information.

Thereby, the key detector 1430 identifies the *n*-gram having the lowest appearance frequency (Step S103). Searching the dictionary by the search keyword on the basis of the *n*-gram thus identified makes it possible to complete the text search process in a short time. If the searching of the dictionary is based on an *n*-gram having a higher appearance frequency, the text search process takes longer. In the following, description is given by assuming that "mo" has the lowest appearance frequency.

Subsequently, the key detector 1430 judges whether the number of the search character strings into which delimiters are inserted in Step S12 in FIG. 9 is one or more (Step S104). When the number of the search character strings is one (Yes in Step S104), the key detector 1430 designates the search character string as a standard character string (Step S105). After the designation, a single-character-string search process is carried out (Step S106). Here, the standard character string is used as a standard in determining priorities.

When the number of the search character strings is two or more (No in Step S104), the key detector 1430 designates, as a standard character string, the search character string including the *n*-gram having the lowest appearance frequency among the *n*-grams selected in Step S101, and also designates, as verification character strings, the search character strings other than the one designated as the standard character string (Step S107). This is to reduce the amount of calculation required for searching. After the designation, a multiple-character-string search process is carried out in which searching by multiple search keywords is performed (Step S108). Details of these processes are to be described later. When the search process in S106 to S108 is completed, the keyword search process in FIG. 11 is terminated.

The single-character-string search process carried out in Step S106 is described with reference to FIG. 12. First, the key detector 1430 acquires *n*-grams of the standard character string that are selected as *n*-grams not including any delimiter in Step S101 in FIG. 11 (Step S21).

Thereafter, the key detector 1430 carries out an appearing-position acquisition process in which all the appearing positions of the standard character string in the rearranged CTD are acquired (Step S22).

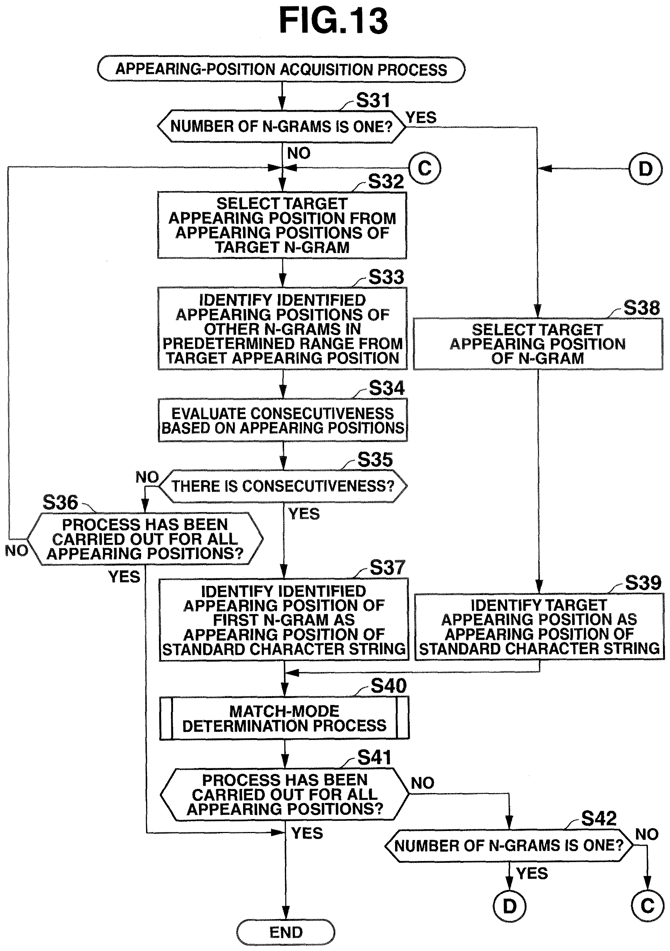

The appearing-position acquisition process carried out in Step S22 is described with reference to FIG. 13. First, the key detector 1430 judges whether the number of the *n*-grams acquired as *n*-grams not including any delimiter in Step S21, is one (Step S31). When the number of the *n*-grams in the keyword portion is not one, for example, when the inputted search keyword consists of three or more characters (No in Step S31), the key detector 1430 selects a target *n*-gram from among the *n*-grams, and then selects one or more positions in which the target *n*-gram appears in the search-target texts (Step S32). In this embodiment, the *n*-gram identified as the *n*-gram having the lowest appearance frequency in Step S103 in FIG. 11 is designated as a target *n*-gram from among the *n*-grams acquired in Step S21 in FIG. 12. Accordingly, "mo" is designated as the target *n*-gram. Searching the dictionary by the search keyword on the basis of the *n*-gram having the lowest appearance frequency reduces the number of times the loop to be described later (the loop from Step S32 to Step S42 in FIG. 13) is repeated before termination of the appearing-position acquisition process. This enables high-speed searching.

In Step S32, the key detector 1430 selects, as a target appearing position, the first appearing position of the target *n*-gram from the appearing-position information of the target *n*-gram.

Thereafter, the key detector 1430 identifies the appearing position of each of the *n*-grams other than the target *n*-gram (an identified appearing position) (Step S33).

Specifically, the key detector 1430 acquires information indicating a predetermined range stored in advance by the information storage 110. Then, the key detector 1430 identified, as an identified appearing position, the appearing position of each of the other *n*-grams ("ov" and "ve") in the predetermined range from the target appearing position (Step S33).

Subsequently, the key detector 1430 evaluates consecutiveness of the target appearing position and the identified appearing positions of the other *n*-grams (Step S34), and then judges whether or not there is consecutiveness (Step S35). In this way, the key detector 1430 judges whether the search keyword is found in the position including the target appearing position.

Specifically, in Step S34, the key detector 1430 acquires a relative position (for example, the distance and the positional relation) of the target *n*-gram and each of the other *n*-grams in the search character string. For example, in the search character string "·move·" having the delimiters inserted, the target *n*-gram "mo" is positioned one character before one of the other *n*-grams "ov" and two characters before the other one of the other *n*-grams "ve". The relative position is positional information indicating that the target *n*-gram is "positioned *n* character(s) after or *n* character(s) before" each of the other *n*-grams as described above.

By comparing the target appearing position and the identified appearing positions acquired with reference to the S file and the AP file in Steps S32 and S33, the key detector 1430 acquires the relative position of the target *n*-gram and each of the other *n*-grams in the rearranged CTD. When the relative position between the target *n*-gram and each of all the other *n*-grams is consistent in the search keyword and the rearranged CTD, the key detector 1430 evaluates that there is consecutiveness. By contrast, when the relative position between the target *n*-gram and any of the other *n*-grams is inconsistent in the search keyword and the rearranged CTD, the key detector 1430 evaluates that there is no consecutiveness. In this way, the key detector 1430 evaluates consecutiveness of the *n*-grams for the target appearing position (Step S34).

On the basis of the evaluation of consecutiveness in Step S34, the key detector 1430 judges whether or not there is consecutiveness (Step S35). When judging that there is no consecutiveness (No in Step S35), the key detector 1430 does not recognize the target appearing position as a search match portion, and terminates the process. The key detector 1430 then judges whether or not the process has been carried out for each of all the appearing positions of the target *n*-gram (Step S36).

When judging that the process has not been carried out for all the appearing positions of the target *n*-gram (No in Step S36), the key detector 1430 returns to Step S32, and repeats the process by selecting the next appearing position.

When judging that the process has been carried out for all the appearing positions (Yes in Step S36), on the other hand, the key detector 1430 terminates the appearing-position acquisition process.

By contrast, when judging that there is consecutiveness (Yes in Step S35), the key detector 1430 identifies the identified appearing position of the first *n*-gram of all the *n*-grams extracted in Step S21, as the appearing position of the standard character string in the rearranged CTD (Step S37).

By contrast, when determining that the number of *n*-grams is one in Step S31 (Yes in Step S31), the key detector 1430 designates the *n*-gram as a target *n*-gram. Then, the key detector 1430 obtains the appearing positions as in Step S32, and then selects a target appearing position from among the appearing positions (Step S38). Thereby, the key detector 1430 designates the target appearing position as the appearing position of the standard character string in the rearranged CTD (Step S39).

When the appearing position of the search keyword is identified in Step S37 or Step S39, the delimiter detector 1440 and the determiner 160 carry out a match-mode determination process (Step S40). The match-mode determination process is a process of determining the match mode of the search keyword.

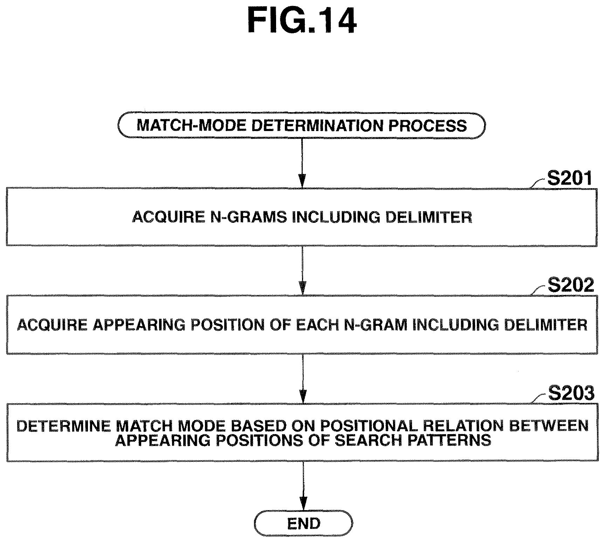

The match-mode determination process carried out in Step S40 is described below with reference to FIG. 14. In the match-mode determination process, first, the delimiter detector 1440 acquires *n*-grams each including a delimiter from among the *n*-grams extracted in Step S 13 in FIG. 9 (Step S201). For example, when the search keyword is "move", the delimiter detector 1440 acquires the first *n*-gram "·m" and the last *n*-gram "e·".

Then, with reference to the S file and the AP file, the delimiter detector 1440 acquires the appearing positions of the *n*-grams acquired in Step S201 (Step S202). This process is carried out only once for each target text, for example.

Subsequently, the determiner 160 determines the match mode on the basis of the positional relation of the appearing position of the search keyword identified in Step S37 in FIG. 13 and the appearing position of each of the *n*-grams acquired as n-grams including a delimiter in Step S202 (Step S203). Specifically, when the first *n*-gram ("·m") appears immediately before the appearing position of the search keyword and the last *n*-gram ("e·") appears immediately after the appearing position among the *n*-grams acquired in Step S201, the determiner 160 determines that the match mode is "exact match". By contrast, when the first *n*-gram ("·m") appears immediately before the appearing position of the search keyword while the last *n*-gram ("e·") does not appear immediately after the appearing position, the determiner 160 determines that the match mode is "beginning match". In addition, when the first *n*-gram ("·m") does not appear immediately before the appearing position of the search keyword while the last *n*-gram ("e·") appears immediately after the appearing position, the determiner 160 determines that the match mode is "end match". When neither the first *n*-gram nor the last *n*-gram appears immediately before and after the appearing position, respectively, the determiner 160 determines that the match mode is "partial match". Upon completion of the determination of the match mode by the determiner 160 on the basis of the positional relation of the appearing positions of the search patterns, the match-mode determination process is terminated.

Returning to FIG. 13, when the match mode is determined in Step S40, the searcher 140 judges whether or not the above-described process is carried out by using each of all the appearing positions of the target *n*-gram as a target appearing position (Step S41). When there are one or more appearing positions that are still to be subjected to the process (No in Step S41), the searcher 140 repeats the process for the next appearing position. In this case, the searcher 140 judges whether or not the number of the *n*-grams is one (Step S42). When the number of the *n*-grams is one (Yes in Step S42), the process returns to Step S38. When the number of the *n*-grams is two or more (No in Step S42), the process returns to Step S32.

By contrast, when the match-mode determination process has been carried out for each of all the appearing positions (Yes in Step S41), this means that all the appearing positions of the standard character string are identified, and therefore the appearing-position acquisition process is terminated.

Returning to FIG. 12, when acquiring all the appearing positions of the standard character string in the target text in the appearing-position acquisition process in Step S22, the searcher 140 judges whether or not any match portion is detected in the target text (Step S23). When the searcher 140 judges that no match portion is detected (No in Step S23), the single-character-string search process for the target text is terminated.

When one or more match portions are detected (Yes in Step S23), on the other hand, the searcher 140 calculates an evaluation value for each match portion on the basis of the match mode (Step S24). Specifically, the searcher 140 identifies the part (the head part CE, the commentary part CC, or the example part CX) of the unit in which the match portion is included.

To identify the part in which the match portion is included, the searcher 140 identifies the head part CE that starts from the position indicated by an address preceding the address indicating the appearing position identified for the standard character string and that has the highest address indicating the corresponding start position. The head part CE thus identified by the searcher 140 is referred to as an identified head part. The identified head part is a head part CE of the unit in which the appearing position is identified.

Subsequently, with reference to the T file ("number.idx" in FIG. 8), the searcher 140 acquires the address of the start position of the identified head part, the information indicating the address of the start position of the commentary part CC explaining the identified head part, the address of the start position of the example part CX corresponding to the identified head part, the example-start-position-information storing address of the identified head part, the dictionary number identifying a dictionary carrying the headword, and the head number identifying the identified head part. The unit including the identified head part is referred to as an identified unit. On the basis of the acquired addresses of the respective parts, the searcher 140 identifies the part of the identified unit in which the match portion is included. The part thus identified is referred to as an identified part.

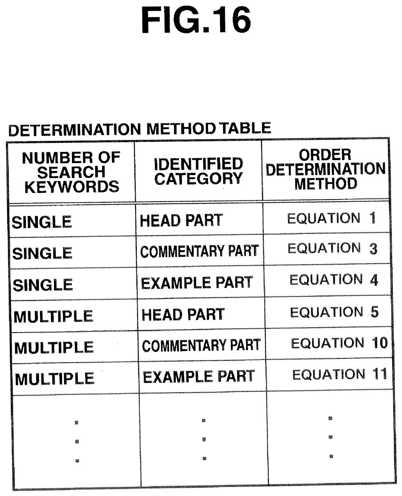

In Step S24, the calculator 150 further identifies an order determination method with reference to a determination method table shown in FIG. 16.

For example, when the number of the search keywords indicates "single" (that is, one) and the head part CE is the appearing part, the calculator 150 identifies Equation (1). Here, the text included in the head part CE is referred to as an identified text.

Thereafter, the calculator 150 calculates the evaluation value of the match portion by using the identified Equation (Step S24). The smaller the evaluation value is, the higher the output priority becomes.

In this embodiment, the output priority ($Est_{idxid,0}$) when the number of the search keywords is one and the identified part is the head part CE, is calculated by using Equation (1) given below.

[Equation 1]

$$Est_{idxid,cgy} = Est_{idxid,0} = \frac{NumStr_{headlin,hdlid}}{NumStr_{stdstr}} + EstDetect_{stdtr} \cdots (1)$$

In Equation (1), $NumStr_{index}$ denotes the length of the character string of the head part CE serving as the identified part. Further, $NumStr_{stdstr}$ denotes the length of the standard character string. In addition, $EstDetect_{stdtr}$ denotes the evaluation value of the standard character string based on the match mode, and is calculated by using Equation (2) given below.

[Equation 2]

$$EstDetect_{stdtr} = ValDetect \times Val\_PENALTY\_DETECT \cdots (2)$$

In Equation (2), $ValDetect_{stdtr}$ denotes a value indicating a penalty provided for the priority, the penalty being determined according to the match mode. $ValDetect_{stdtr}$ is set to have a small numerical value when the match mode is the one given a high evaluation value. In this embodiment, $ValDetect_{stdtr}$ is set at 0 in the case of exact match; 1, in the case of beginning match; 2, in the case of end match; and 3, in the case of partial match (middle match). In other words, exact match is given the highest evaluation, and beginning match, end match, and partial match are given lower evaluations in this order. It is possible to set the order and the specific numerical values freely at the time of factory shipment or by a user.

Val_PENALTY _DETECT is a weight for $ValDetect_{stdtr}$, and is a numerical value set at the time of factory shipment or by a user operation. The larger the numerical value is, the larger the penalty becomes when the match mode is one given a low evaluation.

The evaluation value calculated by using Equation (1) is the smallest when the standard character string and the character string in the head part CE serving as the identified part (that is, the head text) matches exactly. By contrast, the larger the number of characters apart from those in the standard character string is in the head text, the larger the evaluation value becomes. This is because, in general, the users often desire that head texts each of which exactly matches the standard character string serving a search keyword, be displayed. It is also because, in general, the users often desire that head texts having a smaller number of characters apart from the search keyword be displayed rather than those having a larger number of characters apart from the search keyword. Further, the lower the evaluation given to the corresponding match mode is, the larger the evaluation value calculated by using Equation (1) becomes. This is because the users often desire to prioritize search results each showing match in a match mode given a higher evaluation (for example, beginning match) compared with search results each showing match in a match mode given a lower evaluation (for example, partial match), even though the numbers of the characters included in the respective results are the same.

The output priority ($Est_{idxid,1}$) when the number of the search keywords is one and the identified part is the commentary part CC, is calculated by using Equation (3) given below.

**[Equation 3]**

$$Est_{idxid,1} = (Pos_{stdstr} - PosSt_{idxid,commentary}) + EstDetect_{stdtr} \cdots (3)$$

In Equation (3), $Pos_{stdstr}$ denotes the appearing position of the standard character string. $PosSt_{idxid,commentary}$ denotes the start position of the commentary part CC corresponding to the identified head part. Here, the closer the identified appearing position of the standard character string is to the start position of the commentary part CC, the smaller the evaluation value calculated by using Equation (3) becomes. For example, when multiple commentary texts each including the standard character string are classified into the same commentary part CC, the earlier the position in which the commentary text is stored is in the commentary part CC, the smaller the evaluation value for the commentary text becomes. This is because, among the commentary texts classified into a commentary part CC in the rearranged CTD, the commentary texts each explaining, for example, a general meaning or a frequently-used meaning are likely to be stored in early positions and, in general, the users often desire that such commentary texts be displayed. In other words, it is considered to be likely that the commentary texts stored in early positions in a commentary part CC are those the users desire. Here, among the commentary texts, the character string including the identified part and having a predetermined number of characters is referred to as an identified text.

In Equation (3), $EstDetect_{stdtr}$ is added. When no delimiter is inserted into the commentary part CC, $EstDetect_{stdtr}$ in Equation (3) is set at 0 so as not to take account of the match mode. By contrast, when delimiters are inserted into a predetermined important word in the commentary part CC, for example, $EstDetect_{stdtr}$ in Equation (3) is set at a value larger than that in Equation (1). In this way, it is possible to assign a high priority to a portion that matches the important word in a match mode given a high evaluation (for example, exactly matches the important word).

The output priority ($Est_{idxid,2}$) when the number of the search keywords is one and the identified part is the example part CX, is calculated by using Equation (4) given below.

**[Equation 4]**

$$Est_{idxid,2} = (Pos_{stdstr} - PosSt_{idxid,example,expid}) + EstDetect_{stdtr} \cdots (4)$$

In Equation (4), $PostSt_{idxid,example,expid}$ denotes the start position of each example text including the standard character string (having an example number expid) in the example part CX corresponding to the identified head part idxid.

Here, the searcher 140 acquires $PosSt_{idxid,example,expid}$ in the following procedure.

First, the searcher 140 obtains the example-start-position information on the basis of the example-start-position-information storing address acquired in Step S24, by referring to the EP file shown in FIG. 9. In addition, the searcher 140 searches out information indicating the maximum difference among the differences each being equal to or smaller than that between the obtained start position of the example part CX and the identified appearing position to be subjected to the process, from the multiple pieces of information included in the example-start-position information and each indicating the corresponding difference from the example-part start position.

Thereafter, the searcher 140 identifies the position of the searched-out piece of information on the difference in the example-start-position information according to the order of the pieces of information included in the example-start-position information, on the basis of the predetermined number of bytes assigned for each difference. Then, the searcher 140 designates the identified number as the example number.

Thereafter, the searched-out difference is added to the start position of the example part CX corresponding to the identified head part. Thereby, the start position of the example text having the identified example number ($PosSt_{idxid,example,expid}$) is calculated.

The closer the appearing position of the standard character string is to the start position of the example text, the smaller the evaluation value calculated by using Equation (4) becomes. For example, when multiple example texts each including the standard character string are included in the same example part CX, the earlier the position in which the standard character string (for example, "while" or the like) is used in the example text, the smaller the evaluation value for the example text becomes. This is because, in general, example texts each describing a general example or a frequently-used example of the standard character string (for example, "while" or the like) serving as a search keyword, are often used in earlier positions. It is also because, in general, the users often desire that texts each describing a general example or a frequently-used example be displayed. In other words, the earlier the position in which the standard character string is stored in the example text, the more likely the example text is to be the one desired by the users. Here, among the example texts, each character string including the identified part and having a predetermined number of characters is referred to as an identified text.

Here, all the above-described identified texts are those to be displayed as search results each including a search match portion. The identified texts are, however, not limited to these, and alternatively, it is possible that the identified texts are extracted from texts each including the search result, on the basis of any preset setting information.

In Equation (4), EstDetect$_{stdtr}$ is added. When no delimiter is inserted into the example part CX, EstDetect$_{stdtr}$ in Equation (4) is set at 0 so as not to take account of the match mode. By contrast, when delimiters are inserted into a predetermined important word in the example part CX, for example, EstDetect$_{stdtr}$ in Equation (4) is set at a value larger than that in Equation (1). In this way, it is possible to assign a high priority to a part that matches the important word in a match mode given a high evaluation (for example, exactly matches the important word).

After calculating an evaluation value for each of all the appearing positions in Step S24 in FIG. 12, the single-character-string search process is terminated.

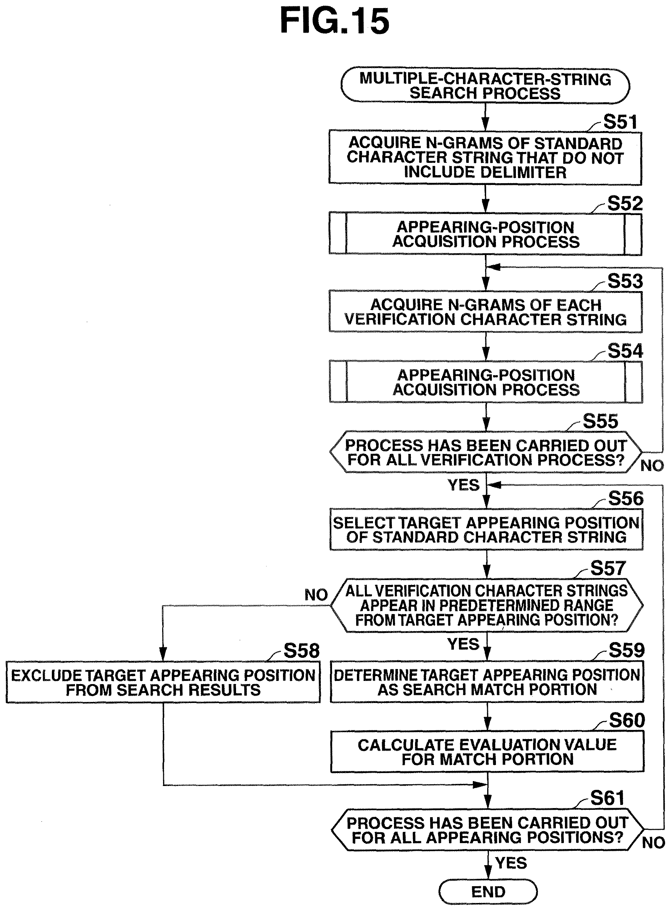

Next, the multiple-character-string search process carried out in Step S108 in FIG. 11 is described with reference to FIG. 15.

In the multiple-character-string search process, the key detector 1430 acquires *n*-grams of the standard character string, the *n*-grams being selected in Step S101 in FIG. 11 as *n*-grams not including any delimiter (Step S51).

Then, the key detector 1430 carries out the appearing-position acquisition process in FIG. 13 to acquire all the appearing positions of the standard character string in the rearranged CTD (Step S52).

Further, the key detector 1430 acquires *n*-grams of one of the verification character strings determined in Step S 107 in FIG. 11 (Step S53).

Thereafter, the key detector 1430 carries out the appearing-position acquisition process in FIG. 13 to acquire all the appearing positions of the verification character string in the rearranged CTD (Step S54).

After acquiring all the appearing positions of the verification character string, the key detector 1430 judges whether there are one or more verification character strings that are still to be subjected to the process (Step S55). When judging that there are one or more verification character strings still to be subjected to the process (No in Step S55), the key detector 1430 repeats the process from Step S53 for the next verification character string still to be subjected to the process.

When judging that the appearing positions of all the verification character strings are acquired (Yes in Step S55), the key detector 1430 selects one of the appearing positions of the standard character string acquired in Step S52, as a target appearing position (Step S56).

Thereafter, the key detector 1430 judges whether all the verification character strings are found in a predetermined range from the target appearing position, on the basis of the appearing positions of the verification character strings acquired in Step S54 (Step S57). Here, when the target appearing position is in the head part CE having a certain head number, the predetermined range corresponds to the entire head part CE. Further, when the target appearing position is in the commentary part CC, the predetermined range corresponds to the range of a predetermined number of characters in the entire commentary part CC. When the target appearing position is in the example part CX, the predetermined range corresponds to the range for each of the example texts (each of Example text 11, Example text 12, and the like in FIG. 5B) in which the target appearing position is located.

The "predetermined range" is, however, not limited to these, and it is possible to set the predetermined range at any range. Further, it is also possible that the setting of the predetermined range is changed by a user operation or the like.

When none of the verification character strings are found in the predetermined range from the target appearing position (No in Step S57), the key detector 1430 judges that the target appearing position is not a match portion in the searching by the multiple search keywords (AND search). Then, the key detector 1430 excludes the target appearing position from the search results (Step S58).

On the other hand, when judging that all the verification character strings are found in the predetermined range from the target appearing position (Yes in Step S57), the key detector 1430 determines that the target appearing position is a search match portion (Step S59). Then, the key detector 1430 calculates the evaluation value for the match portion (Step S60).

In the following, a method of calculating an evaluation value performed in Step S60 is described. First, by referring to the determination method table in FIG. 16, the calculator 150 identifies an order determination method that corresponds to the identified category and the number of words in the search keyword.

When the target appearing position is located in the head part CE, the calculator 150 acquires an order determination method "Equation 5", which is associated with the number of search keywords "multiple" and the identified category "head part".

Subsequently, the calculator 150 acquires the number of characters in the standard character string and the number of characters in each of the verification character strings. Thereafter, the calculator 150 substitutes the acquired numbers of the characters for Equation (5) given below, to calculate the evaluation value for the match portion.

**[Equation 5]**

$$Est_{idxid,cgy} = Est_{idxid,0} = EstDist_{WithoutOrder} + EstDetect_{stdtr} \cdots (5)$$

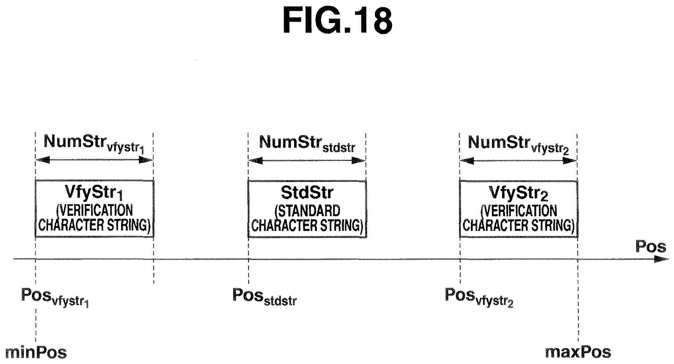

In Equation (5), $EstDist_{WithoutOrder}$ denotes the distance from the start to the end of the match portion in the target character string (see FIG. 18) when the searching is performed without taking account of the order in which the search keywords are inputted. $EstDist_{WithoutOrder}$ is calculated by using Equation (6) given below.

**[Equation 6]**

$$EstDist_{WithoutOrder} = EstDist = \max Pos - misPos \cdots (6)$$

In Equation (6), minPos denotes the start position of the range including all the search character strings when $Dist_{stdstr,vfystrk}$ obtained by using Equation (7) given below is the minimum for each of all numbers k (k denotes the number of the verification character strings).

In addition, maxPos denotes the end position of the range including all the search character strings when $Dist_{stdstr,vfystrk}$ obtained by using Equation (7) given below is the maximum for each of all the numbers $k$ ($k$ denotes the number of the verification character strings).

**[Equation 7]**

$$Dist_{stdstr,vfystr_k} = \begin{cases} (Pos_{vfystr_k} + NumStr_{vfystr_k}) - Pos_{stdstr} & \left[ Pos_{stdstr} \leq Pos_{vfystr_k} \right] \\ (Pos_{stdstr} + NumStr_{stdstr}) - Pos_{vfystr_k} & \left[ Pos_{stdstr} > Pos_{vfystr_k} \right] \end{cases} \cdots (7)$$

In Equation (7), $NumStr_{stdstr}$ denotes the number of characters in the standard character string. $NumStr_{vfystrk}$ denotes the number of characters in the $k$-th verification character string. $Pos_{stdstr}$ denotes the appearing position of the standard character string. $Pos_{vfystrk}$ denotes the appearing position of the $k$-th verification character string.

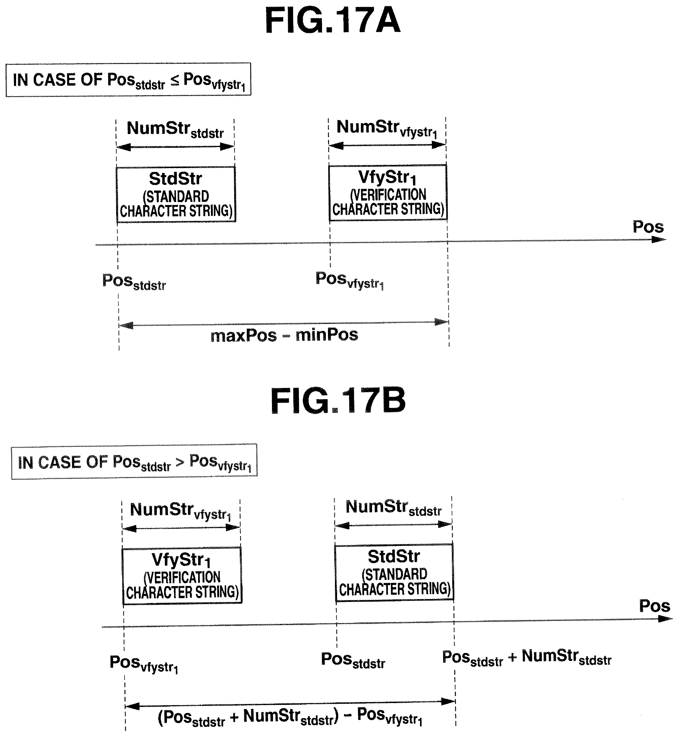

In the following, the distance between the standard character string and the $k$-th verification character string calculated by using Equation (7) is described. The description is given by assuming that the standard character string is "while" and the first verification character string is "for". FIG. 17A illustrates the case in which the identified appearing position of the standard character string "while" precedes the identified appearing position of the first verification character string "for". The distance between the standard character string "while" and the first verification character string "for" corresponds to the distance from the start of the standard character string "while" to the end of the verification character string "for". By contrast, FIG. 17B illustrates the case in which the identified appearing position of the standard character string "while" comes after the identified appearing position of the first verification character string "for". The distance between the standard character string "while" and the first verification character string "for" corresponds to the distance from the start of the verification character string "for" to the end of the standard character string "while".

Next, description is given of an inter-search-keyword distance calculated on the basis of the maximum value maxPos and the minimum value minPos calculated by using Equation (6) (in the case of not taking account of the input order). Here, the description is given by using, as an example, the standard character string "while" and the first verification character string "for", and the second verification character string "a". As shown in FIG. 18, the maximum value maxPos and the minimum value minPos correspond respectively to the maximum value and the minimum value of a minimum inclusion range, which is the minimum range including the standard character string, the first verification character "for", having the minimum distance from the standard character string "while", and the second verification character string "a", having the second minimum distance from the standard character string "while". When the input order is not taken into account, the inter-search-keyword distance corresponds to the difference between the minimum value minPos and the maximum value maxPos.

Further, EstDitect in Equation (5) denotes the total evaluation value of the evaluation values for the match modes of the multiple search keywords, and is calculated by using Equation (8) given below.

**[Equation 8]**

$$EstDetect = EstDetect_{stdstr} + \sum_{k=1}^{M-1} EstDetect_{vfystr_k} \cdots (8)$$

In Equation (8), M denotes the number of search character strings. $EstDetect_{vfystrk}$ denotes the evaluation value for the match mode of each verification character string defined in the same way as $EstDetect_{stdstr}$, and is calculated by using Equation (9).

**[Equation 9]**

$$EstDetect_{vfystr_k} = ValDetect_{vfystr_k} \times Val\_PENALTY\_DETECT \cdots (9)$$

In Equation (9), $ValDetect_{vfystrk}$ is 1, when the match mode of the $k$-th verification character string is beginning match; 2, when the match mode is end match; and 3, when the match mode is partial match (middle match). Here, it is better to set the numerical value of Val_PENALTY_DETECT to be smaller than that for the standard character string in Equation (2). This makes it possible for the evaluation value for the match mode of the verification character string to be smaller than that for the match mode of the standard character string.

As described above, the evaluation value calculated by using Equation (5) is the minimum when the character strings included in the minimum inclusion range consist only of the inputted search keywords. In addition, the smaller the minimum inclusion range, which includes all the search keywords, is, the smaller the calculated evaluation becomes. For example, when the multiple inputted search keywords are "for", "a", and "while", the evaluation value for an example text including "for a while" is smaller than that for an example text including "for a brief while". Further, the evaluation value for an example text including "for a brief while" is smaller than that for an example text "This will allow you to look 'for a job while' you are working at a part-time job" including "for a job while". This is because, in general, the users often desire that example texts each showing a usage example of an idiom consisting only of the search keywords be displayed. It is also because the user's desire that an example text including a small number of character strings apart from the search keywords be displayed compared with an example text including a large number of character strings apart from the search keywords. Further, it is also because a larger the number of characters between the multiple inputted search keywords is in the example text, the more frequently the example text shows a usage example of an idiom different from that consisting of the multiple inputted search keywords.

In addition, the lower the evaluation for the match mode of each of the verification character strings and the standard character string is, the larger the evaluation value calculated by using Equation (5) becomes. For example, when the match mode of each of the verification character strings and the standard character string is a mode given a low evaluation (for example, partial match), the evaluation value calculated by using Equation (5) is large. When the match mode of any of the verification character strings and the standard character string is a mode given a high evaluation (for example, beginning match), the evaluation value calculated by using Equation (5) is small. In this way, the portions are displayed preferentially each of which includes all the multiple search keywords and thus includes the contents assumed to be desired by the users.

Returning to FIG. 16, when the identified category is the commentary part CC, the calculator 150 acquires an order determination method "Equation 10" associated with the number of search keywords "multiple" and the identified category "commentary part".

Next, the calculator 150 calculates the inter-search-keyword distance and the minimum value minPos as in the case of calculating an evaluation value by using Equation (5). In addition, the calculator 150 calculates the start position of the commentary part CC corresponding to the identified head part, as in the case of calculating an evaluation value by using Equation (3). Thereafter, the calculator 150 calculates the inter-search-keyword distance, the minimum value minPos, and the start position of the commentary part CC $Pos_{idxid,commentary}$ by using Equation (10) given below.

**[Equation 10]**

$$Est_{idxid,cgy} = Est_{idxid,1} =$$
$$EstDist_{WithoutOrder} + (\min Pos - PosSt_{idxid,comentary}) + EstDetect \cdots (10)$$

In the case where commentary texts have the same inter-search-keyword distance (in the case of not taking account of the input order), the closer the minimum value minPos of the minimum inclusion range including the search keywords is to the start position of the commentary part CC, the smaller the evaluation value for the commentary text calculated by using Equation (10) becomes. Further, in the case where commentary texts have the same distance between the minimum value minPos and the start position of the commentary part CC, the shorter the inter-search-keyword distance (in the case of not taking account of the input order) of the commentary text is, the smaller the evaluation value for the commentary text calculated by using Equation (6) becomes. For EstDetect, when no delimiter is inserted into the commentary part CC, the value of Val_PENALTY_DETECT is set at 0. When one or more delimiters are inserted into the commentary part CC, the value of Val_PENALTY_DETECT is set at the same value as in Equation (5).

Next, when the identified category is the example part CX, the calculator 150 acquires, from the determination method table in FIG. 16, an order determination method "Equation 11" associated with the number of keywords "multiple" and the identified category "example part".

In this case, as in the case of calculating an evaluation value by using Equation (5), the calculator 150 calculates the inter-search-keyword distance and the minimum value minPos. Then, as in the case of calculating an evaluation value by using Equation (10), the calculator 150 calculates the start position of the example text. Thereafter, the calculator 150 calculates the evaluation value for the identified text by applying, to Equation (11) given below, the inter-search-keyword distance, the minimum value minPos, and the start position of the example text $Pos_{idxid,example,expid}$.

**[Equation 11]**

$$Est_{idxid,cgy} = Est_{idxid,2} =$$

$$EstDist_{WithoutOrder} + (\min Pos - PosSt_{idxid,example,expid}) + EstDetect \cdots (11)$$

In the case where example texts have the same inter-search-keyword distance between the multiple search keywords arranged in the same order (in the case of not taking account of the input order), the closer the minimum value minPos is to the start position of the example text, the smaller the evaluation value for the example text calculated by using Equation (11) becomes. Further, in the case where example texts have the same distance between the minimum value minPos and the start position of the example text, the shorter the inter-search-keyword distance (in the case of not taking account of the input order) of the example text is, the smaller the evaluation value for the example text calculated by using Equation (11) becomes. For EstDetect, the value is set as in the case of Equation (10).

Returning to FIG. 15, when the evaluation value for the match portion in the target appearing position is calculated (Step S60), the key detector 1430 judges whether or not the above-described process has been carried out by using, as a target appearing position, each of all the appearing positions of the standard character string acquired in Step S52 (Step S61). When there are one or more appearing positions that are still to be subjected to the process (No in Step S61), the key detector 1430 repeats the process from Step S56 for the next appearing position still to be subjected to the process.

When the process has already been carried out for each of all the appearing positions (Yes in Step S61), the multiple-character-string search process is terminated.

Returning to FIG. 9, when the keyword search process in Step S15 is completed for the target text, the key detector 1430 judges whether the searcher 140 has completed the search process for each of all the texts (each headword and the main body thereof) included in the dictionary data (Step S16). When there are one or more texts that are still to be subjected to the process (No in Step S16), the searcher 140 repeats the process from Step S14 by using the next text as a target text. When the search process has been carried out for each of all the texts (Yes in Step S16), the display 180 displays the search results (Step S17).

Specifically, in Step S17, the determiner 160 determines, for each of the categories, the display order of one or more identified texts, on the basis of the evaluation values calculated in Step S24 in FIG. 12 and Step S60 in FIG. 15. In this embodiment, the determiner 160 determines the order so that the smaller the evaluation value for the identified text is, the earlier the position in which the identified text is displayed becomes. Then, the outputter 170 displays, for each category, the one or multiple identified texts arranged in the determined display order. Specifically, the outputter 170 outputs, to the display 180, a signal that represents a search-result display screen as the one shown in FIG. 6. The display 180 displays the search-result display screen, and thereafter the text search process is terminated.

As has been described, with the text search system according to this embodiment, it is possible to carry out searching based on each of multiple search methods, for example, beginning-match search, end-match search, partial-match search, exact-match search, and the like, by performing the search process once. In addition, it is possible to present the search results to the users. Having such an aspect, the text search system is highly convenient for the users.

In some cases, users desire to compare search results obtained by using different search methods to search out desired texts. For example, suppose that a user searches search-target texts by a keyword and desires to preferentially use results obtained through exact-match search while also using results obtained through beginning-match search. Even in such a case, by using the text search system according to this embodiment, it is possible to obtain the results of both the exact-match search and the beginning-match search by a single operation.

In addition, in the searching based on the evaluation values calculated by using Equation (1) and start marks, index information for partial-match search is used. This implements means for identifying (an identifier) the first character string of each text serving as a target of beginning-match search. This suppresses an increase in the computational complexity required to implement a highly-convenient text search function. For example, it is possible to identify a first character string by searching using a start mark. This reduces the number of search match candidates compared with the case not using any start mark, thereby reducing the computational complexity.

Moreover, searching is performed on each of the search-target texts on the basis of *n*-grams not including any delimiter, first. Then, only when one or more match portions are detected, *n*-grams each including a delimiter are evaluated, and the match mode is judged. In this way, it is possible to omit a process for checking the positions of the respective *n*-grams including a delimiter, when not necessary, thereby enabling high-speed search processing.

Further, using the search index (inverted index) makes it possible to identify the positions of respective extracted *n*-grams not including any delimiter, and to evaluate the consecutiveness of the *n*-grams. In this way, it is possible to perform high-speed detection of parts in which the search keyword appears in the search-target texts.

Furthermore, it is possible to calculate each evaluation value according to the match mode such as beginning match, end match, partial match, or exact match, by using Equation (2), Equation (9), and the like. As a result, search results that correspond to the needs of each user are displayed preferentially. This makes it possible to efficiently search out texts desired by users.

Furthermore, it is possible to determine priorities of match portions by using evaluation-value calculation methods corresponding respectively to the head part, the commentary part, and the example part. This makes it possible to calculate the priorities according to the characteristics of the match portions, thereby enabling high search efficiency.

Furthermore, evaluation values are calculated so that the priorities of match portions whose match modes are exact match, beginning match, end match, and partial match are higher in this order. This makes it possible to display search results in the order according to the needs of each user, from the search results exactly matching the headword, such results having a high level of importance, to the search results of partial match in which the search keyword matches a middle portion only, such results having a low level of importance.

Furthermore, by imposing a condition that the value n for each *n*-gram is set at two or larger, the number of appearing portions of the *n*-grams is reduced, thereby improving the processing speed.

(Modified Examples)

The description has been given above of Embodiment 1. However, the present invention is not limited to this embodiment.

For example, in Embodiment 1, a half-size space is used as a delimiter, but the delimiter is not limited to this. It is possible to use, for example, a system-unique mark (or any other marks that do not appear in texts serving as targets of beginning-match search) or the like, as a delimiter.

Moreover, in Embodiment 1, the process of generating a rearranged CTD and an inverted index (the data generation process) is carried out by the text search system 100. However, the generation is not limited to this. For example, it is sufficient if the storage stores rearranged CTD and an inverted index generated in advance by an external device. Alternatively, it is possible that the rearranged CTD and the inverted index corresponding to data on each dictionary are stored at the time of factory shipment, for example.

In Embodiment 1 and the modified examples thereof, the electronic dictionary includes lexicons, and more specifically, includes a Japanese dictionary, an English-Japanese dictionary, a Japanese-English dictionary, an encyclopedia, and the like. Moreover, in Embodiment 1, the description is given that the text search system 100 searches dictionaries by one or more search keywords. However, searching is not limited to this. For example, the search-target texts are not limited to dictionaries, and it is possible that the search-target texts are any texts. Further, it is possible to use any method as a concrete method, especially an order determination method, for each of beginning-match search and partial-match search.

Furthermore, any modification is applicable to the contents of the process for implementing each of the above components. For example, in Embodiment 1, *n*-grams that do not include any delimiter are detected first. However, the detection is not limited to this, and n-grams each including a delimiter are detected first, for example.

Search-target texts are, for example, a patent specification including texts classified into categories such as "Title of the Invention" and "Claims", for example. Alternatively, search-target texts are, for example, a manual of a product including a category for the names of the functions of the product and a category for the operation methods for using the functions.

In addition, according to the present invention, it is possible for the text search system 100 according to any of Embodiment 1 and the modified examples thereof to cause an existing text search device (such as an electronic dictionary or the like) to function as the text search system 100, by applying appropriate programs. In other words, it is possible that the text search programs for implementing the functions of the text search system 100 are applied so as to be executed by the computer (the central processing unit or the like) controlling the existing text search device.

Alternatively, it is possible that the functions of the text search system 100 are implemented by a server on a network. In this case, the server acquires one or more search character strings from a terminal via a network, and returns search results to the terminal, for example.

Such programs are distributed by any distribution method, and are stored and distributed in a recording medium such as a memory card, a CD-ROM, or a DVD-ROM, for example. Alternatively, the programs are distributed via the Internet, for example. Still alternatively, it is also possible to store, in an external server, part of or the entire data of the rearranged CTD and the inverted index required for the above-described search process, and to carry out the search process by acquiring the stored data by using a communication function.

It should be apparent that various embodiments and modifications are possible to be made herein without departing from the scope of the present invention. In other words, although the description of some preferred embodiments of the present invention has been given above, the description of the preferred embodiment is provided by way of illustration only and is not intended to limit the scope of the invention. It should be understood that the scope of the invention includes the scope equivalent to the invention described in the scope of claims as well as the preferred embodiment.

**Claims**

1. A search system **characterized by** comprising:

   an index storage (110) that stores index information about multiple pieces of text data including a word with delimiters added before and after the word, the index information associating $n$-gram character string patterns with position information indicating positions in which the $n$-gram character string patterns appear in the text data;
   an acquirer (130) that acquires a search character string;
   a search $n$-gram generator (120) that generates a search $n$-gram string by adding delimiters before and after the acquired search character string and then extracting a plurality of $n$-gram character string patterns from the delimited search character string;
   a search-target finder (140) that reads out, from the index storage (110), the position information associated with $n$-gram character string patterns that are not including the delimiter among the generated search $n$-gram string, and then finds whether or not there is the search character string in the text data, on the basis of the read-out position information;
   a match-mode determiner (160) that reads out, from the index storage (110), each piece of the position information associated with two $n$-gram character string patterns each including the delimiter added before or after the search character string among the generated search $n$-gram string, and determines a match mode of the search character string and the word included in the text data by judging if the two positions each indicated by the pieces of read-out position information are adjacent to the position of the n-gram character string patterns associated with the search character string found by the search target finder; and
   an outputter (170) that outputs multiple pieces of text data judged to include the search character string, according to a priority determined on the basis of the determined match mode; wherein
   the outputter (170) determines the priority based on the determined match mode by a calculation method based on multiple categories, the multiple categories (CC, CE, CX) being included in the text data.

2. The search system according to claim 1, **characterized in that** the match-mode determiner (160) determines whether the match mode is exact match or partial match.

3. The search system according to claim 1 or 2, **characterized in that** the text data is dictionary data including a headword category (CE) and a headword-commentary-information category (CB) as the categories.

4. A search method carried out by using a computer including an index storage (110) that stores index information about multiple pieces of text data including a word with delimiters added before and after the word, the index information associating $n$-gram character string patterns with position information indicating positions in which the $n$-gram character string patterns appear in the text data, the search method including:

   an acquisition step (S11) of acquiring a search character string;
   a search $n$-gram generation step (S12, S13) of generating a search $n$-gram string by adding delimiters before and after the acquired search character string and then extracting a plurality of $n$-gram character string patterns from the delimited search character string;

a search-target finder step (S14, S15) of reading out (S22, S52, S54), from the index storage (110), the position information associated with an *n*-gram character string pattern that is not including the delimiter among the generated search *n*-gram strings, and then finding (S23) whether or not there is the search character string in the text data, on the basis of the read-out position information;

a match-mode determination step (S40) of reading out (S202), from the index storage (110), each piece of the position information associated with two *n*-gram character string patterns each including the delimiter added before or after the search character string among the generated search *n*-gram string, and determining (S203) a match mode of the search character string and the word included in the text data by judging if the two positions each indicated by the pieces of read-out position information are adjacent to the position of the n-gram character string patterns associated with the search character string found by the search target finder step (S14, S15); and

an output step (S17) of outputting multiple pieces of text data judged to include the search character string, according to a priority determined on the basis of the determined match mode;

wherein the output step (S17) determines the priority based on the determined match mode by a calculation method based on multiple categories, the multiple categories (CC, CE, CX) being included in the text data.

5. The search method according to claim 4, **characterized in that**, in the match-mode determination step (S40), whether the match mode is exact match or partial match is determined.

6. The search method according to claim 4 or 5, **characterized in that** the text data is dictionary data including a headword category (CE) and a headword-commentary-information category (CB) as the categories.

7. A program for causing a computer to function as:

an index storage (110) that stores index information about multiple pieces of text data including a word with delimiters added before and after the word, the index information associating *n*-gram character string patterns with position information indicating positions in which the *n*-gram character string patterns appear in the text data;

an acquirer (130) that acquires a search character string;

a search *n*-gram generator (120) that generates a search *n*-gram string by adding delimiters before and after the acquired search character string and then extracting a plurality of *n*-gram character string patterns from the delimited search character string;

a search-target finder (140) that reads out, from the index storage (110), the position information associated with *n*-gram character string patterns that are not including the delimiter among the generated search *n*-gram string, and then finds whether or not there is the search character string in the text data, on the basis of the read-out position information;

a match-mode determiner (160) that reads out, from the index storage (110), each piece of the position information associated with two *n*-gram character string patterns each including the delimiter added before or after the search character string among the generated search *n*-gram string, and determines a match mode of the search character string and the word included in the text data by judging if the two positions each indicated by the pieces of read-out position information are adjacent to the position of the n-gram character string patterns associated with the search character string found by the search target finder; and

an outputter (170) that outputs multiple pieces of text data judged to include the search character string, according to a priority determined on the basis of the determined match mode; wherein

the outputter (170) determines the priority based on the determined match mode by a calculation method based on multiple categories, the multiple categories (CC, CE, CX) being included in the text data.

8. The program according to claim 7, **characterized in that** the match-mode determiner (160) determines whether the match mode is exact match or partial match.

9. The program according to claim 7 or 8, **characterized in that** the text data is dictionary data including a headword category (CE) and a headword-commentary-information category (CB) as the categories.

**Patentansprüche**

1. Suchsystem, **dadurch gekennzeichnet, dass** es umfasst:

einen Indexspeicher (110), der Indexinformation über mehrere Stücke von Textdaten, einschließlich eines Wortes mit vor oder nach dem Wort hinzugefügten Trennzeichen, speichert, wobei die Indexinformation *n*-Gramm-Zeichenkettenmuster mit Positionsinformation assoziiert, die Positionen angibt, an denen die *n*-Gramm-Zeichenkettenmuster in den Textdaten auftreten;

eine Beschaffungseinrichtung (130), die eine Suchzeichenkette beschafft;

einen Such-*n*-Gramm-Erzeuger (120), der eine Such-*n*-Gramm-Kette erzeugt, indem er Trennzeichen vor und nach der beschafften Suchzeichenkette hinzufügt und dann eine Mehrzahl von *n*-Gramm-Zeichenkettenmustern aus der mit Trennzeichen versehenen Suchzeichenkette extrahiert;

einen Suchzielfinder (140), der aus dem Indexspeicher (110) die Positionsinformation ausliest, die mit *n*-Gramm-Zeichenkettenmustern unter der erzeugten Such-*n*-Gramm-Kette assoziiert ist, die das Trennzeichen nicht enthalten, und dann auf der Basis der ausgelesenen Positionsinformation herausfindet, ob die Suchzeichenkette in den Textdaten enthalten ist;

eine Bestimmungseinrichtung (160) für einen Übereinstimmungsmodus, die aus dem Indexspeicher (110) jedes Stück der Positionsinformation ausliest, das mit zwei *n*-Gramm-Zeichenkettenmustern unter der erzeugten Such-*n*-Gramm-Kette assoziiert ist, die jeweils das hinzugefügte Trennzeichen vor oder nach der Suchzeichenkette enthalten, und einen Übereinstimmungsmodus der Suchzeichenkette und des in den Textdaten enthaltenen Wortes bestimmt, indem sie beurteilt, ob die beiden Positionen, die jeweils durch die Stücke der ausgelesenen Positionsinformation angegeben werden, der Position der mit der von dem Suchzielfinder gefundenen Suchzeichenkette assoziierten *n*-Gramm-Zeichenkettenmuster benachbart sind; und

eine Ausgabeeinrichtung (170), die mehrere Stücke von Textdaten ausgibt, für die beurteilt wurde, dass sie die Suchzeichenkette enthalten, gemäß einer auf der Basis des bestimmten Übereinstimmungsmodus bestimmten Priorität, wobei

die Ausgabeeinrichtung (170) die Priorität beruhend auf dem bestimmten Übereinstimmungsmodus durch ein auf mehreren Kategorien basierendes Berechnungsverfahren bestimmt, wobei die mehreren Kategorien (CC, CE, CX) in den Textdaten enthalten sind.

2. Suchsystem nach Anspruch 1, **dadurch gekennzeichnet, dass** die Bestimmungseinrichtung (160) für einen Übereinstimmungsmodus bestimmt, ob der Übereinstimmungsmodus exakte Übereinstimmung oder teilweise Übereinstimmung ist.

3. Suchsystem nach Anspruch 1 oder 2, **dadurch gekennzeichnet, dass** die Textdaten Wörterbuchdaten sind, die eine Schlagwortkategorie (CE) und eine Schlagwort-Kommentarinformationskategorie (CB) als die Kategorien enthalten.

4. Suchverfahren, ausgeführt unter Verwendung eines Computers, der einen Indexspeicher (110) enthält, der Indexinformation über mehrere Stücke von Textdaten, einschließlich eines Wortes mit vor oder nach dem Wort hinzugefügten Trennzeichen, speichert, wobei die Indexinformation *n*-Gramm-Zeichenkettenmuster mit Positionsinformation assoziiert, die Positionen angibt, an denen die *n*-Gramm-Zeichenkettenmuster in den Textdaten auftreten, wobei das Suchverfahren enthält:

einen Beschaffungsschritt (S11) des Beschaffens einer Suchzeichenkette;

einen Such-*n*-Gramm-Erzeugungsschritt (S12, S13) des Erzeugers einer Such-*n*-Gramm-Kette, durch Hinzufügen von Trennzeichen vor und nach der beschafften Suchzeichenkette und anschließendes Extrahieren einer Mehrzahl von *n*-Gramm-Zeichenkettenmustern aus der mit Trennzeichen versehenen Suchzeichenkette;

einen Suchzielauffindeschritt (S14, S15) des Auslesens (S22, S52, S54), aus dem Indexspeicher (110), der Positionsinformation, die mit einem *n*-Gramm-Zeichenkettenmuster unter der erzeugten Such-*n*-Gramm-Kette assoziiert ist, das das Trennzeichen nicht enthält, und anschließendes Herausfinden (S23), auf der Basis der ausgelesenen Positionsinformation, ob die Suchzeichenkette in den Textdaten enthalten ist;

einen Bestimmungsschritt (S40) für einen Übereinstimmungsmodus, der aus dem Indexspeicher (110) jedes Stücks der Positionsinformation ausliest (S202), das mit zwei *n*-Gramm-Zeichenkettenmustern unter der erzeugten Such-*n*-Gramm-Kette assoziiert ist, die jeweils das hinzugefügte Trennzeichen vor oder nach der Suchzeichenkette enthalten, und einen Übereinstimmungsmodus der Suchzeichenkette und des in den Textdaten enthaltenen Wortes bestimmt (S203), indem er beurteilt, ob die beiden Positionen, die jeweils durch die Stücke der ausgelesenen Positionsinformation angegeben werden, der Position der mit der von dem Suchzielauffindeschritt (S14, S15) gefundenen Suchzeichenkette assoziierten *n*-Gramm-Zeichenkettenmuster benachbart sind; und

einen Ausgabeschritt (S17) des Ausgebens mehrerer Stücke von Textdaten, für die beurteilt wurde, dass sie die Suchzeichenkette enthalten, gemäß einer auf der Basis des bestimmten Übereinstimmungsmodus bestimmten Priorität, wobei

der Ausgabeschritt (S17) die Priorität beruhend auf dem bestimmten Übereinstimmungsmodus durch ein auf mehreren Kategorien basierendes Berechnungsverfahren bestimmt, wobei die mehreren Kategorien (CC, CE, CX) in den Textdaten enthalten sind.

5. Suchverfahren nach Anspruch 4, **dadurch gekennzeichnet, dass** in dem Bestimmungsschritt (S40) für einen Übereinstimmungsmodus bestimmt wird, ob der Übereinstimmungsmodus exakte Übereinstimmung oder teilweise Übereinstimmung ist.

6. Suchverfahren nach Anspruch 4 oder 5, **dadurch gekennzeichnet, dass** die Textdaten Wörterbuchdaten sind, die eine Schlagwortkategorie (CE) und eine Schlagwort-Kommentarinformationskategorie (CB) als die Kategorien enthalten.

7. Programm, welches einen Computer veranlasst, zu funktionieren als:

ein Indexspeicher (110), der Indexinformation über mehrere Stücke von Textdaten, einschließlich eines Wortes mit vor oder nach dem Wort hinzugefügten Trennzeichen, speichert, wobei die Indexinformation $n$-Gramm-Zeichenkettenmuster mit Positionsinformation assoziiert, die Positionen angibt, an denen die $n$-Gramm-Zeichenkettenmuster in den Textdaten auftreten;
eine Beschaffungseinrichtung (130), die eine Suchzeichenkette beschafft;
ein Such-$n$-Gramm-Erzeuger (120), der eine Such-$n$-Gramm-Kette erzeugt, indem er Trennzeichen vor und nach der beschafften Suchzeichenkette hinzufügt und dann eine Mehrzahl von $n$-Gramm-Zeichenkettenmustern aus der mit Trennzeichen versehenen Suchzeichenkette extrahiert;
ein Suchzielfinder (140), der aus dem Indexspeicher (110) die Positionsinformation ausliest, die mit $n$-Gramm-Zeichenkettenmustern unter der erzeugten Such-$n$-Gramm-Kette assoziiert ist, die das Trennzeichen nicht enthalten, und dann auf der Basis der ausgelesenen Positionsinformation herausfindet, ob die Suchzeichenkette in den Textdaten enthalten ist;
eine Bestimmungseinrichtung (160) für einen Übereinstimmungsmodus, die aus dem Indexspeicher (110) jedes Stück der Positionsinformation ausliest, das mit zwei $n$-Gramm-Zeichenkettenmustern unter der erzeugten Such-$n$-Gramm-Kette assoziiert ist, die jeweils das hinzugefügte Trennzeichen vor oder nach der Suchzeichenkette enthalten, und einen Übereinstimmungsmodus der Suchzeichenkette und des in den Textdaten enthaltenen Wortes bestimmt, indem sie beurteilt, ob die beiden Positionen, die jeweils durch die Stücke der ausgelesenen Positionsinformation angegeben werden, der Position der mit der von dem Suchzielfinder gefundenen Suchzeichenkette assoziierten $n$-Gramm-Zeichenkettenmuster benachbart sind; und
eine Ausgabeeinrichtung (170), die mehrere Stücke von Textdaten ausgibt, für die beurteilt wurde, dass sie die Suchzeichenkette enthalten, gemäß einer auf der Basis des bestimmten Übereinstimmungsmodus bestimmten Priorität, wobei
die Ausgabeeinrichtung (170) die Priorität beruhend auf dem bestimmten Übereinstimmungsmodus durch ein auf mehreren Kategorien basierendes Berechnungsverfahren bestimmt, wobei die mehreren Kategorien (CC, CE, CX) in den Textdaten enthalten sind.

8. Programm nach Anspruch 7, **dadurch gekennzeichnet, dass** die Bestimmungseinrichtung (160) für einen Übereinstimmungsmodus bestimmt, ob der Übereinstimmungsmodus exakte Übereinstimmung oder teilweise Übereinstimmung ist.

9. Programm nach Anspruch 7 oder 8, **dadurch gekennzeichnet, dass** die Textdaten Wörterbuchdaten sind, die eine Schlagwortkategorie (CE) und eine Schlagwort-Kommentarinformationskategorie (CB) als die Kategorien enthalten.

## Revendications

1. Système de recherche **caractérisé en ce qu'**il comprend :

un stockage d'index (110) qui stocke des informations d'index relatives à plusieurs éléments de données de texte comprenant un mot avec des délimiteurs ajoutés avant et après le mot, les informations d'index associant des schémas de chaîne de caractères N-grammes à des informations de position indiquant des positions auxquelles les schémas de chaîne de caractères N-grammes figurent dans les données de texte ;
un dispositif acquéreur (130) qui acquiert une chaîne de caractères de recherche ;
un générateur de N-grammes de recherche (120) qui génère une chaîne de N-grammes de recherche en ajoutant des délimiteurs avant et après la chaîne de caractères de recherche acquise et puis en extrayant une pluralité de schémas de chaîne de caractères N-grammes de la chaîne de caractères de recherche délimitée ;

un dispositif identificateur de cible de recherche (140) qui lit, à partir du stockage d'index (110), les informations de position associées à des schémas de chaîne de caractères N-grammes qui n'incluent pas le délimiteur au sein de la chaîne de N-grammes de recherche générée, puis identifie la présence ou non de la chaîne de caractères de recherche dans les données de texte, en fonction des informations de position lues ;

un détermineur de mode de correspondance (160) qui lit, à partir du stockage d'index (110), chaque élément des informations de position associées à deux schémas de chaîne de caractères N-grammes chacun incluant le délimiteur ajouté avant ou après la chaîne de caractères de recherche au sein de la chaîne de N-grammes de recherche générée, et détermine un mode de correspondance de la chaîne de caractères de recherche et du mot inclus dans les données de texte en jugeant si les deux positions chacune indiquée par les éléments des informations de position lues sont adjacentes à la position des schémas de chaîne de caractères N-grammes associés à la chaîne de caractères de recherche identifiée par le dispositif identificateur de cible de recherche ; et

un générateur (170) qui génère plusieurs éléments de données de texte jugés comme en mesure d'inclure la chaîne de caractères de recherche, selon une priorité déterminée en fonction du mode de correspondance déterminé ; dans lequel

le générateur (170) détermine la priorité en fonction du mode de correspondance déterminé par une méthode de calcul reposant sur plusieurs catégories, les plusieurs catégories (CC, CE, CX) étant incluses dans les données de texte.

2. Le système de recherche selon la revendication 1, **caractérisé en ce que** le détermineur de mode de correspondance (160) détermine si le mode de correspondance est une correspondance exacte ou une correspondance partielle.

3. Le système de recherche selon la revendication 1 ou 2, **caractérisé en ce que** les données de texte sont des données de dictionnaire incluant une catégorie de mot-clé (CE) et une catégorie de mot-clé-commentaire-informations (CB) en tant que catégories.

4. Procédé de recherche effectué par un ordinateur incluant un stockage d'index (110) qui stocke des informations d'index relatives à plusieurs éléments de données de texte comprenant un mot avec des délimiteurs ajoutés avant et après le mot, les informations d'index associant des schémas de chaîne de caractères N-grammes à des informations de position indiquant des positions auxquelles les schémas de chaîne de caractères N-grammes figurent dans les données de texte, le procédé comprenant :

une étape d'acquisition (S11) d'acquisition d'une chaîne de caractères de recherche ;

une étape de génération de N-grammes de recherche (S12, S13) de génération d'une chaîne de N-grammes de recherche en ajoutant des délimiteurs avant et après la chaîne de caractères de recherche acquise puis en extrayant une pluralité de schémas de chaîne de caractères N-grammes de la chaîne de caractères de recherche délimitée ;

une étape d'identification de cible de recherche (S14, S15) de lecture (S22, S52, S54), à partir du stockage d'index (110), des informations de position associées à un schéma de chaîne de caractères N-grammes qui n'inclue pas le délimiteur au sein des chaînes de N-grammes de recherche générées, puis d'identification (S23) de la présence ou non de la chaîne de caractères de recherche dans les données de texte, en fonction des informations de position lues ;

une étape de détermination de mode de correspondance (S40) de lecture (S202), à partir du stockage d'index (110), de chaque élément des informations de position associées à deux schémas de chaîne de caractères N-grammes chacun incluant le délimiteur ajouté avant ou après la chaîne de caractères de recherche au sein de la chaîne de N-grammes de recherche générée, et de détermination (S203) d'un mode de correspondance de la chaîne de caractères de recherche et du mot inclus dans les données de texte en jugeant si les deux positions chacune indiquée par les éléments des informations de position lues sont adjacentes à la position des schémas de chaîne de caractères N-grammes associés à la chaîne de caractères de recherche identifiée à l'étape d'identification de cible de recherche (S14, S15) ; et

une étape de génération (170) de génération de plusieurs éléments de données de texte jugés comme en mesure d'inclure la chaîne de caractères de recherche, selon une priorité déterminée en fonction du mode de correspondance déterminé ;

dans lequel l'étape de génération (S17) détermine la priorité en fonction du mode de correspondance déterminé par une méthode de calcul reposant sur plusieurs catégories, les plusieurs catégories (CC, CE, CX) étant incluses dans les données de texte.

**5.** Le procédé de recherche selon la revendication 4, **caractérisé en ce que**, à l'étape de détermination de mode de correspondance (S40), est déterminé si le mode de correspondance est une correspondance exacte ou une correspondance partielle.

**6.** Le procédé de recherche selon la revendication 4 ou 5, **caractérisé en ce que** les données de texte sont des données de dictionnaire incluant une catégorie de mot-clé (CE) et une catégorie de mot-clé-commentaire-informations (CB) en tant que catégories.

**7.** Procédé faisant fonctionner un ordinateur tel que :

un stockage d'index (110) qui stocke des informations d'index relatives à plusieurs éléments de données de texte comprenant un mot avec des délimiteurs ajoutés avant et après le mot, les informations d'index associant des schémas de chaîne de caractères N-grammes à des informations de position indiquant des positions auxquelles les schémas de chaîne de caractères N-grammes figurent dans les données de texte ;
un dispositif acquéreur (130) qui acquiert une chaîne de caractères de recherche ;
un générateur de N-grammes de recherche (120) qui génère une chaîne de N-grammes de recherche en ajoutant des délimiteurs avant et après la chaîne de caractères de recherche acquise et puis en extrayant une pluralité de schémas de chaîne de caractères N-grammes de la chaîne de caractères de recherche délimitée ;
un dispositif identificateur de cible de recherche (140) qui lit, à partir du stockage d'index (110), les informations de position associées à des schémas de chaîne de caractères N-grammes qui n'incluent pas le délimiteur au sein de la chaîne de N-grammes de recherche générée, puis identifie la présence ou non de la chaîne de caractères de recherche dans les données de texte, en fonction des informations de position lues ;
un détermineur de mode de correspondance (160) qui lit, à partir du stockage d'index (110), chaque élément des informations de position associées à deux schémas de chaîne de caractères N-grammes chacun incluant le délimiteur ajouté avant ou après la chaîne de caractères de recherche au sein de la chaîne de N-grammes de recherche générée, et détermine un mode de correspondance de la chaîne de caractères de recherche et du mot inclus dans les données de texte en jugeant si les deux positions chacune indiquée par les éléments des informations de position lues sont adjacentes à la position des schémas de chaîne de caractères N-grammes associés à la chaîne de caractères de recherche identifiée par le dispositif identificateur de cible de recherche : et
un générateur (170) qui génère plusieurs éléments de données de texte jugés comme en mesure d'inclure la chaîne de caractères de recherche, selon une priorité déterminée en fonction du mode de correspondance déterminé ; dans lequel
le générateur (170) détermine la priorité en fonction du mode de correspondance déterminé par une méthode de calcul reposant sur plusieurs catégories, les plusieurs catégories (CC, CE, CX) étant incluses dans les données de texte.

**8.** Le programme selon la revendication 7, **caractérisé en ce que** le détermineur de mode de correspondance (160) détermine si le mode de correspondance est une correspondance exacte ou une correspondance partielle.

**9.** Le programme selon la revendication 7 ou 8, **caractérisé en ce que** les données de texte sont des données de dictionnaire incluant une catégorie de mot-clé (CE) et une catégorie de mot-clé-commentaire-informations (CB) en tant que catégories.

# FIG.1

# FIG.2

# FIG.3

$$\boxed{\text{DATA GENERATION PROCESS}}$$

⌐S1

READ OUT DICTIONARY DATA

⌐S2

EXTRACT HEADWORD AND MAIN-BODY TEXTS

⌐S3

INSERT DELIMITERS INTO EXTRACTED TEXTS

⌐S4

GENERATE AND STORE REARRANGED CONTENT TEXT DATA (REARRANGED CTD)

⌐S5

GENERATE AND STORE DICTIONARY NUMBER AND THE LIKE

⌐S6

GENERATE AND STORE APPEARING-POSITION INFORMATION FILE (AP FILE)
FROM REARRANGED CTD

⌐S7

GENERATE AND STORE N-GRAM CHARACTER STRING PATTERN FILE (S FILE)
FROM REARRANGED CTD

⌐S8

GENERATE AND STORE EXAMPLE-START-POSITION INFORMATION FILE (EP FILE)
FROM REARRANGED CTD

⌐S9

GENERATE AND STORE FILE INCLUDING INFORMATION ON HEADWORD
AND THE LIKE (T FILE), FROM REARRANGED CTD

$$\boxed{\text{END}}$$

# FIG.4

ACQUIRER — 130

SEARCHER — 140
- INSERTER — 1410
- EXTRACTOR — 1420
- KEY DETECTOR — 1430
- DELIMITER DETECTOR — 1440

GENERATOR — 120

INFORMATION STORAGE — 110

CALCULATOR — 150

DETERMINER — 160

OUTPUTTER — 170

DISPLAY — 180

100

EP 2 711 854 B1

# FIG.5A

DICTIONARY DATA

| HEADWORD 1 | | | CE |
|---|---|---|---|
| COMMENTARY TEXT 11 | EXAMPLE TEXT 11 | COMMENTARY TEXT 12 | CB |
| EXAMPLE TEXT 12 | COMMENTARY TEXT 13 | EXAMPLE TEXT 13 | |
| HEADWORD 2 | | | CE |
| COMMENTARY TEXT 21 | EXAMPLE TEXT 21 | COMMENTARY TEXT 22 | CB |
| EXAMPLE TEXT 22 | COMMENTARY TEXT 23 | EXAMPLE TEXT 23 | |
| ⋮ | ⋮ | ⋮ | |

# FIG.5B

REARRANGED CONTENT TEXT DATA

| ·HEADWORD 1· | | | CE |
|---|---|---|---|
| COMMENTARY TEXT 11 | COMMENTARY TEXT 12 | COMMENTARY TEXT 13 | CC |
| EXAMPLE TEXT 11 | EXAMPLE TEXT 12 | EXAMPLE TEXT 13 | CX |
| ·HEADWORD 2· | | | CE |
| COMMENTARY TEXT 21 | COMMENTARY TEXT 22 | COMMENTARY TEXT 23 | CC |
| EXAMPLE TEXT 21 | EXAMPLE TEXT 22 | EXAMPLE TEXT 23 | CX |
| ⋮ | ⋮ | ⋮ | |

# FIG.6

SEARCH-RESULT DISPLAY SCREEN

| HEAD PART | |
|---|---|
| **TEXT** | **DICTIONARY NAME** |
| while | ENGLISH-JAPANESE DICTIONARY |
| whiles | ENGLISH-JAPANESE DICTIONARY |
| meanwhile | ENGLISH-JAPANESE DICTIONARY |
| while SENTENCE | ENCYCLOPEDIA |

| COMMENTARY PART | |
|---|---|
| **TEXT** | **DICTIONARY NAME** |
| [while] lag, meantime, interim, meanwhile　ひとつの期間と何らかの出来事の間の時 | JAPANESE-ENGLISH DICTIONARY |
| ⋮ | ⋮ |

| EXAMPLE PART | |
|---|---|
| **TEXT** | **DICTIONARY NAME** |
| It's going to take a while to correct all the mistakes.: すべての間違いを修正するには時間がかかります。 | ENGLISH-JAPANESE DICTIONARY |
| It's been a while since we last saw each other.: この前お会いして以来、お久しぶりですね。 | ENGLISH-JAPANESE DICTIONARY |
| ⋮ | ⋮ |

# FIG.7

DICTIONARY TABLE

| DICTIONARY NUMBER | DICTIONARY NAME | START ADDRESS |
|---|---|---|
| 1 | JAPANESE DICTIONARY | 0x8000 |
| 2 | ENGLISH-JAPANESE DICTIONARY | 0x8800 |
| 3 | JAPANESE-ENGLISH DICTIONARY | 0x9000 |
| 4 | ENCYCLOPEDIA | 0x9800 |
| ⋮ | ⋮ | ⋮ |

EP 2 711 854 B1

# FIG.8

S FILE
(pattern.idx)

| BIGRAM CHARACTER STRING PATTERN |
| APPEARING-POSITION-INFORMATION STORING ADDRESS |

| BIGRAM CHARACTER STRING PATTERN |
| APPEARING-POSITION-INFORMATION STORING ADDRESS |

| BIGRAM CHARACTER STRING PATTERN |
| APPEARING-POSITION-INFORMATION STORING ADDRESS |

| MONOGRAM CHARACTER STRING PATTERN |
| APPEARING-POSITION-INFORMATION STORING ADDRESS |

| MONOGRAM CHARACTER STRING PATTERN |
| APPEARING-POSITION-INFORMATION STORING ADDRESS |

AP FILE
(position.idx)

APPEARANCE FREQUENCY
APPEARING POSITION
APPEARING POSITION
⋮
APPEARING POSITION

APPEARANCE FREQUENCY
APPEARING POSITION
APPEARING POSITION
⋮
APPEARING POSITION

APPEARANCE FREQUENCY
APPEARING POSITION
APPEARING POSITION
⋮
APPEARING POSITION

APPEARANCE FREQUENCY
APPEARING POSITION
APPEARING POSITION
⋮
APPEARING POSITION

APPEARANCE FREQUENCY
APPEARING POSITION
APPEARING POSITION
⋮
APPEARING POSITION

T FILE
(number.idx)

START POSITION OF HEAD PART
START POSITION OF COMMENTARY PART
START POSITION OF EXAMPLE PART
NUMBER OF EXAMPLES
EXAMPLE-START-POSITION-INFORMATION STORING ADDRESS
DICTIONARY NUMBER
HEAD NUMBER

START POSITION OF HEAD PART
START POSITION OF COMMENTARY PART
START POSITION OF EXAMPLE PART
NUMBER OF EXAMPLES
EXAMPLE-START-POSITION-INFORMATION STORING ADDRESS
DICTIONARY NUMBER
HEAD NUMBER

EP FILE
(example.idx)

DIFFERENCE FROM EXAMPLE-PART START POSITION
⋮
DIFFERENCE FROM EXAMPLE-PART START POSITION

DIFFERENCE FROM EXAMPLE-PART START POSITION
⋮
DIFFERENCE FROM EXAMPLE-PART START POSITION

27

# FIG.9

```
        ┌─────────────────────────────┐
        │    TEXT SEARCH PROCESS      │
        └─────────────────────────────┘
                      │
                      ▼                           ┌S11
┌──────────────────────────────────────────────────────┐
│              ACQUIRE SEARCH KEYWORD                    │
└──────────────────────────────────────────────────────┘
                      │
                      ▼                           ┌S12
┌──────────────────────────────────────────────────────┐
│ INSERT DELIMITER INTO POSITIONS BEFORE AND AFTER SEARCH KEYWORD │
└──────────────────────────────────────────────────────┘
                      │
                      ▼                           ┌S13
┌──────────────────────────────────────────────────────┐
│      EXTRACT N-GRAM STRINGS (SEARCH PATTERNS)          │
└──────────────────────────────────────────────────────┘
                      │
                      ▼                           ┌S14
┌──────────────────────────────────────────────────────┐
│                 SELECT TARGET TEXT                     │
└──────────────────────────────────────────────────────┘
                      │
                      ▼                           ┌S15
┌──────────────────────────────────────────────────────┐
│              KEYWORD SEARCH PROCESS                    │
└──────────────────────────────────────────────────────┘
                      │
                      ▼                           ┌S16
NO  ◁────────────< PROCESS HAS BEEN CARRIED OUT FOR ALL TEXTS? >
                      │ YES
                      ▼                           ┌S17
┌──────────────────────────────────────────────────────┐
│              DISPLAY SEARCH RESULTS                    │
└──────────────────────────────────────────────────────┘
                      │
                      ▼
                ┌──────────┐
                │   END    │
                └──────────┘
```

# FIG.10A

SEARCH KEYWORD
(ONE CHARACTER)

" i "

SEARCH CHARACTER STRING
(THREE CHARACTERS)

" ▪ i ▪ "

SEARCH PATTERN
(N-GRAM STRING)

" ▪ i " (BIGRAM)

" i " (MONOGRAM)

" i ▪ " (BIGRAM)

# FIG.10B

SEARCH KEYWORD
(FOUR CHARACTERS)

"move"

SEARCH CHARACTER STRING
(SIX CHARACTERS)

" ▪ move ▪ "

SEARCH PATTERN
(N-GRAM STRING)

" ▪ m " (BIGRAM)

"mo" (BIGRAM)

"ov" (BIGRAM)

"ve" (BIGRAM)

"e ▪ " (BIGRAM)

# FIG.11

```
( KEYWORD SEARCH PROCESS )  S15
              │
              ▼                    S101
┌──────────────────────────────────┐
│  SELECT N-GRAMS CORRESPONDING     │
│      TO KEYWORD PORTION           │
└──────────────────────────────────┘
              │
              ▼                    S102
┌──────────────────────────────────┐
│  ACQUIRE APPEARANCE FREQUENCY OF  │
│     EACH SELECTED N-GRAM          │
└──────────────────────────────────┘
              │
              ▼                    S103
┌──────────────────────────────────┐
│  IDENTIFY N-GRAM HAVING LOWEST    │
│     APPEARANCE FREQUENCY          │
└──────────────────────────────────┘
              │
              ▼                    S104
  ⟨ NUMBER OF SEARCH CHARACTER ⟩ NO
  ⟨     STRINGS IS ONE?        ⟩ ──────┐
              │ YES         S105       │
              ▼                        ▼                       S107
┌──────────────────────────────┐   ┌──────────────────────────────────┐
│ DESIGNATE SEARCH CHARACTER   │   │ DESIGNATE SEARCH CHARACTER STRING│
│ STRING AS STANDARD CHARACTER │   │ INCLUDING N-GRAM HAVING LOWEST   │
│ STRING                       │   │ APPEARANCE FREQUENCY, AS STANDARD│
└──────────────────────────────┘   │ CHARACTER STRING, AND OTHER      │
              │                     │ SEARCH CHARACTER STRINGS AS      │
              │                     │ VERIFICATION CHARACTER STRINGS   │
              │                     └──────────────────────────────────┘
              ▼              S106                │                S108
┌──────────────────────────────┐   ┌──────────────────────────────────┐
│  SINGLE-CHARACTER-STRING     │   │  MULTIPLE-CHARACTER-STRING       │
│      SEARCH PROCESS          │   │       SEARCH PROCESS             │
└──────────────────────────────┘   └──────────────────────────────────┘
              │◄───────────────────────────────┘
              ▼
          ( END )
```

# FIG.12

```
( SINGLE-CHARACTER-STRING SEARCH PROCESS )
              │
              ▼                                            S21
┌──────────────────────────────────────────────────────────┐
│ ACQUIRE N-GRAMS OF STANDARD CHARACTER STRING THAT         │
│          DO NOT INCLUDE DELIMITER                         │
└──────────────────────────────────────────────────────────┘
              │
              ▼                                            S22
┌──────────────────────────────────────────────────────────┐
│      APPEARING-POSITION ACQUISITION PROCESS              │
└──────────────────────────────────────────────────────────┘
              │
              ▼                                            S23
  ⟨      MATCH PORTION IS DETECTED?      ⟩ NO ──────┐
              │ YES                       S24       │
              ▼                                     │
┌──────────────────────────────────────────────────┐
│  CALCULATE EVALUATION VALUE FOR MATCH PORTION    │
└──────────────────────────────────────────────────┘
              │◄────────────────────────────────────┘
              ▼
          ( END )
```

# FIG.13

```
┌─────────────────────────────────────────────┐
│  APPEARING-POSITION ACQUISITION PROCESS      │
└─────────────────────────────────────────────┘
                        │
                        ▼          S31
        ◁ NUMBER OF N-GRAMS IS ONE? ▷──── YES ────┐
                       NO                          │
                        │         C                D
                        ▼                          │
              ┌──────────────────┐ S32             │
              │  SELECT TARGET    │                 │
              │  APPEARING POSITION FROM            │
              │  APPEARING POSITIONS OF             │
              │  TARGET N-GRAM    │                 │
              └──────────────────┘                 │
                        │                           │
                        ▼         S33               ▼         S38
              ┌──────────────────┐         ┌──────────────────┐
              │  IDENTIFY IDENTIFIED        │  SELECT TARGET    │
              │  APPEARING POSITIONS OF     │  APPEARING POSITION│
              │  OTHER N-GRAMS IN           │  OF N-GRAM        │
              │  PREDETERMINED RANGE FROM   └──────────────────┘
              │  TARGET APPEARING POSITION  │
              └──────────────────┘          │
                        │                    │
                        ▼         S34        │
              ┌──────────────────┐           │
              │  EVALUATE CONSECUTIVENESS     │
              │  BASED ON APPEARING POSITIONS │
              └──────────────────┘           │
                        │                     │
          NO            ▼         S35         │
     ┌────◁ THERE IS CONSECUTIVENESS? ▷       │
     │ S36               YES                  │
     │ ◁ PROCESS HAS BEEN                     │
   NO│   CARRIED OUT FOR ALL                  │
     │   APPEARING POSITIONS? ▷               │
     │        YES                             │
     │         ▼         S37                  ▼         S39
     │ ┌──────────────────┐         ┌──────────────────┐
     │ │  IDENTIFY IDENTIFIED        │  IDENTIFY TARGET  │
     │ │  APPEARING POSITION OF      │  APPEARING POSITION AS
     │ │  FIRST N-GRAM AS            │  APPEARING POSITION OF
     │ │  APPEARING POSITION OF      │  STANDARD CHARACTER STRING
     │ │  STANDARD CHARACTER STRING  └──────────────────┘
     │ └──────────────────┘          │
     │         │◄─────────────────────┘
     │         ▼         S40
     │ ┌──────────────────┐
     │ │  MATCH-MODE       │
     │ │  DETERMINATION PROCESS
     │ └──────────────────┘
     │         │
     │         ▼         S41
     │ ◁ PROCESS HAS BEEN ──── NO ────┐
     │   CARRIED OUT FOR ALL          │
     │   APPEARING POSITIONS? ▷       ▼         S42
     │        YES            ◁ NUMBER OF N-GRAMS IS ONE? ▷── NO
     │         │                      YES          │
     │         ▼                       D           C
     │   ┌─────────┐
     └──▶│   END   │
         └─────────┘
```

# FIG.14

```
( MATCH-MODE DETERMINATION PROCESS )
                    │
                    ▼                        S201
┌────────────────────────────────────────────────┐
│      ACQUIRE N-GRAMS INCLUDING DELIMITER         │
└────────────────────────────────────────────────┘
                    │
                    ▼                        S202
┌────────────────────────────────────────────────┐
│ ACQUIRE APPEARING POSITION OF EACH N-GRAM INCLUDING DELIMITER │
└────────────────────────────────────────────────┘
                    │
                    ▼                        S203
┌────────────────────────────────────────────────┐
│ DETERMINE MATCH MODE BASED ON POSITIONAL RELATION BETWEEN │
│      APPEARING POSITIONS OF SEARCH PATTERNS      │
└────────────────────────────────────────────────┘
                    │
                    ▼
              (   END   )
```

# FIG.15

MULTIPLE-CHARACTER-STRING
SEARCH PROCESS

S51
ACQUIRE N-GRAMS OF STANDARD
CHARACTER STRING THAT DO NOT
INCLUDE DELIMITER

S52
APPEARING-POSITION
ACQUISITION PROCESS

S53
ACQUIRE N-GRAMS OF EACH
VERIFICATION CHARACTER STRING

S54
APPEARING-POSITION
ACQUISITION PROCESS

S55
PROCESS HAS BEEN CARRIED OUT
FOR ALL VERIFICATION PROCESS? NO

YES

S56
SELECT TARGET APPEARING POSITION
OF STANDARD CHARACTER STRING

S57
NO  ALL VERIFICATION CHARACTER STRINGS
APPEAR IN PREDETERMINED RANGE
FROM TARGET APPEARING POSITION?

YES

S58
EXCLUDE TARGET APPEARING POSITION
FROM SEARCH RESULTS

S59
DETERMINE TARGET APPEARING POSITION
AS SEARCH MATCH PORTION

S60
CALCULATE EVALUATION VALUE
FOR MATCH PORTION

S61
PROCESS HAS BEEN CARRIED OUT
FOR ALL APPEARING POSITIONS? NO

YES

END

33

# FIG.16

DETERMINATION METHOD TABLE

| NUMBER OF SEARCH KEYWORDS | IDENTIFIED CATEGORY | ORDER DETERMINATION METHOD |
|---|---|---|
| SINGLE | HEAD PART | EQUATION 1 |
| SINGLE | COMMENTARY PART | EQUATION 3 |
| SINGLE | EXAMPLE PART | EQUATION 4 |
| MULTIPLE | HEAD PART | EQUATION 5 |
| MULTIPLE | COMMENTARY PART | EQUATION 10 |
| MULTIPLE | EXAMPLE PART | EQUATION 11 |
| ⋮ | ⋮ | ⋮ |

# FIG.17A

IN CASE OF $Pos_{stdstr} \leq Pos_{vfystr_1}$

NumStr$_{stdstr}$

StdStr
(STANDARD
CHARACTER STRING)

NumStr$_{vfystr_1}$

VfyStr$_1$
(VERIFICATION
CHARACTER STRING)

Pos

$Pos_{stdstr}$

$Pos_{vfystr_1}$

maxPos − minPos

# FIG.17B

IN CASE OF $Pos_{stdstr} > Pos_{vfystr_1}$

NumStr$_{vfystr_1}$

VfyStr$_1$
(VERIFICATION
CHARACTER STRING)

NumStr$_{stdstr}$

StdStr
(STANDARD
CHARACTER STRING)

Pos

$Pos_{vfystr_1}$

$Pos_{stdstr}$

$Pos_{stdstr} + NumStr_{stdstr}$

$(Pos_{stdstr} + NumStr_{stdstr}) − Pos_{vfystr_1}$

# FIG.18

$NumStr_{vfystr_1}$

VfyStr$_1$
(VERIFICATION
CHARACTER STRING)

$NumStr_{stdstr}$

StdStr
(STANDARD
CHARACTER STRING)

$NumStr_{vfystr_2}$

VfyStr$_2$
(VERIFICATION
CHARACTER STRING)

Pos

$Pos_{vfystr_1}$

$Pos_{stdstr}$

$Pos_{vfystr_2}$

minPos

maxPos

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000231563 A

- US 20110264675 A1